# EUROPEAN PATENT SPECIFICATION

(11) **EP 3 450 845 B1**
(45) Date of publication and mention of the grant of the patent: **25.11.2020**
(21) Application number: 17789610.7
(22) Date of filing: 26.04.2017
(51) Int. Cl.: F23G 5/50, B66C 13/48, F23G 5/44, G06N 3/12

(54) **CALCULATION DEVICE, CONTROL METHOD FOR CALCULATION DEVICE, CONTROL PROGRAM, AND RECORDING MEDIUM**
BERECHNUNGSVORRICHTUNG, STEUERUNGSVERFAHREN FÜR BERECHNUNGSVORRICHTUNG, STEUERUNGSPROGRAMM UND AUFZEICHNUNGSMEDIUM
DISPOSITIF DE CALCUL, PROCÉDÉ DE COMMANDE POUR UN DISPOSITIF DE CALCUL, PROGRAMME DE COMMANDE ET SUPPORT D'ENREGISTREMENT

(30) Priority: 28.04.2016 JP 2016091952; 29.07.2016 JP 2016150745
(43) Date of publication of application: 06.03.2019
(73) Proprietor: Hitachi Zosen Corporation, Osaka-shi, Osaka 559-8559 (JP)
(72) Inventor: FUJIYOSHI, Makoto, Osaka-shi Osaka 559-8559 (JP); DAI, Yingda, Osaka-shi Osaka 559-8559 (JP); KAWABATA, Kaoru, Osaka-shi Osaka 559-8559 (JP); HIRABAYASHI, Terushi, Osaka-shi Osaka 559-8559 (JP); NISHIYAMA, Yoshihiro, Osaka-shi Osaka 559-8559 (JP); MACKIN, Kenneth James, Tokyo 132-0033 (JP)
(74) Representative: Grünecker Patent- und Rechtsanwälte PartG mbB
(86) International application number: PCT/JP2017/016585
(87) International publication number: WO 2017/188328

(56) References cited:
- EP-A1- 3 470 735
- JP-A- S5 628 188
- JP-A- S6 449 815
- JP-A- H01 271 306
- JP-A- H11 268 883
- JP-A- S57 184 091
- JP-A- 2000 143 151
- JP-A- 2004 326 201
- JP-A- 2010 275 064
- JP-A- 2010 275 064
- JP-A- 2015 187 031

## Description

### Technical Field

The present invention relates to a calculation device and the like for preparing an operation schedule of a crane that operates in a waste pit provided in a waste incineration plant.

### Background Art

A waste incineration plant includes a waste pit for temporarily store waste that has been brought in by a garbage truck. The waste inside the waste pit is mixed by a crane, and then transferred to an incinerator for incineration. The mixing is carried out in order to homogenize properties of waste that is to be fed into the incinerator, and is thus an important process for stably undergone improvements. For example, Patent Literature 1 below discloses an automatic crane operation device that detects a color distribution in a waste pit and transfers waste inside the waste pit such that the waste entirely has the same color distribution. Moreover, Patent Literature 2 below also discloses a technique in relation to automatic crane operation in a waste pit.

JP 2010 275064 A relates to a waste agitation evaluating method, a waste agitation evaluating program and a waste agitation evaluating device. A computation part of a computer performs the following procedures: Namely, after inputting a waste charging signal/bucket grasping signal, it inputs a waste collecting vehicle/crane position signal (S2) and computes the accumulated shape of waste in a pit each time when the waste is charged by a waste collecting vehicle or a crane or the dent portion shape of the waste in the pit each time when the waste is grasped by the crane (S3). Then, it computes an agitating frequency for layers of the waste accumulated in the pit (S4), finds an evaluation value from an evaluation function in accordance with the computed agitating frequency about all positions in the pit (S5), computes a crane control instruction (S6) while selecting a predetermined position in the pit in which a bucket is moved, and outputs it to a display or a crane controller as a guidance for the crane operator (S7).

JP 2015 187031 A relates to a measuring device of agitation state in refuse pit and a measuring method of agitation state in refuse pit. The measuring device comprises a photographing means photographing the inside of a refuse pit and an agitation degree measuring section measuring an agitation state using refuse pit images obtained from the photographing means. The agitation degree measuring section is provided with an image acquisition section acquiring the refuse pit images before and after the predetermined action of a crane, a difference image formation section forming difference images extracting difference from the refuse pit images and an agitation degree map formation part forming agitation degree maps where the difference images obtained from the difference image formation section are divided into a block consisting of at least one pixel and the number of times of difference extraction at the block is stored as agitation degree.

### Citation List

### [Patent Literature]

Patent Literature 1: Japanese Patent Application Publication *Tokukaisho* No. 64-49815 (Publication Date: February 27, 1989)
Patent Literature 2: Japanese Patent Application Publication *Tokukaisho* No. 56-28188 (Publication Date: March 19, 1981)

### Summary of Invention

### Technical Problem

However, the above conventional techniques are not sufficient for full automation of crane operation. For example, according to the technique disclosed in Patent Literature 1, although waste is mixed so that the color distribution becomes homogeneous, colors of waste do not necessarily represent waste properties and a degree of mixing cannot be determined based only on the colors of waste. From this, according to the technique of Patent Literature 1, it is sometimes impossible to obtain a mixed state in which the waste properties are homogeneous. Moreover, there has been no practical evaluation index of waste property so far, and this fact also makes it difficult to automatically prepare an operation schedule of the crane. Meanwhile, according to the technique of Patent Literature 2, although it is possible to automatically restack waste from a higher potion to a lower portion based on determined heights of a waste layer, homogenization of waste properties is not considered and it is impossible to obtain a mixed state in which the waste properties are homogeneous.

As such, according to the conventional techniques, it has been impossible to automatically prepare a crane operation schedule with which waste can be mixed homogeneously, and to automatically operate the crane in accordance with the schedule. Therefore, conventionally, cranes are manipulated based on experiences and intuitions of operators in many waste incineration plants, and this causes a problem that it is impossible to avoid a certain degree of unevenness in waste properties, although it depends on qualifications of operators. Moreover, in recent years, a size of a waste incineration plant is becoming smaller, and this reduction in size enables decrease in production cost of the waste incineration plant. On the other hand, however, a waste storing section also becomes smaller and waste is stacked in such a small space, and this makes it difficult to carry out mixing work for homogenizing waste properties. Further, waste is brought into the small waste storing section one after another, and this causes increase in time taken to restack waste, and this further leads to time constraints on mixing of waste. Consequently, the waste is burned while being insufficiently mixed, and therefore combustion of the waste becomes unstable.

The present invention is accomplished in view of the problems, and its object is to provide a calculation device and the like which make it possible to automatically prepare a crane operation schedule for achieving a predetermined state of waste without relying on an experience and an intuition of an operator of the crane.

### Solution to Problem

In order to attain the object, a calculation device in accordance with an aspect of the present invention is defined in claim 1.

Moreover, in order to attain the object, a method in accordance with an aspect of the present invention for controlling a calculation device is defined in claim 14. Further advantageous embodiments are defined in dependent claims.

### Advantageous Effects of Invention

The present invention brings about an effect of automatically preparing a crane operation schedule for causing a state of waste in the waste pit to become or become closer to a predetermined state without relying on an experience and an intuition of an operator of the crane.

### Brief Description of Drawings

Fig. 1 is a block diagram illustrating an example configuration of main parts in a crane control device in accordance with an embodiment of the present invention.
Fig. 2 is a cross-sectional view schematically illustrating a configuration of a waste incineration plant including a waste pit.
Fig. 3 is a view illustrating a waste storing section and a hopper in the waste pit seen from above.
Fig. 4 is a view showing an example of pit state information.
Fig. 5 is a view illustrating an example of setting areas.
Fig. 6 is a view for explaining an overview of an optimization operation carried out with use of a genetic algorithm.
Fig. 7 is a view illustrating an example of a pit model image.
Fig. 8 is a flowchart illustrating an example of processes carried out by the crane control device.
Fig. 9 is a flowchart illustrating an example of an optimization operation carried out by the crane control device.
Fig. 10 is a view showing an example of an operation schedule for each area.

### Description of Embodiments

### [Embodiment 1]

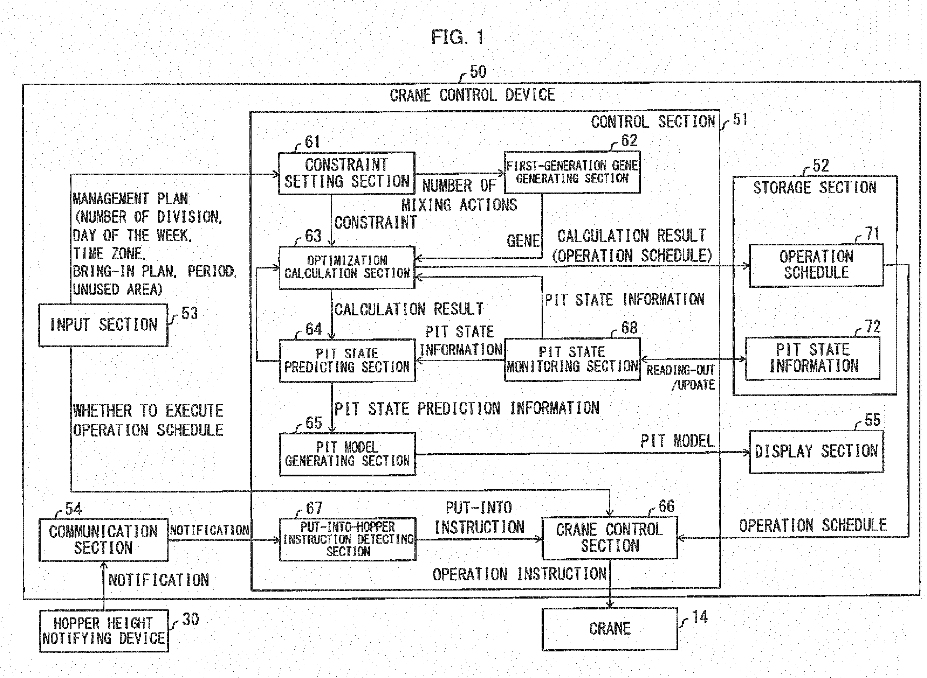

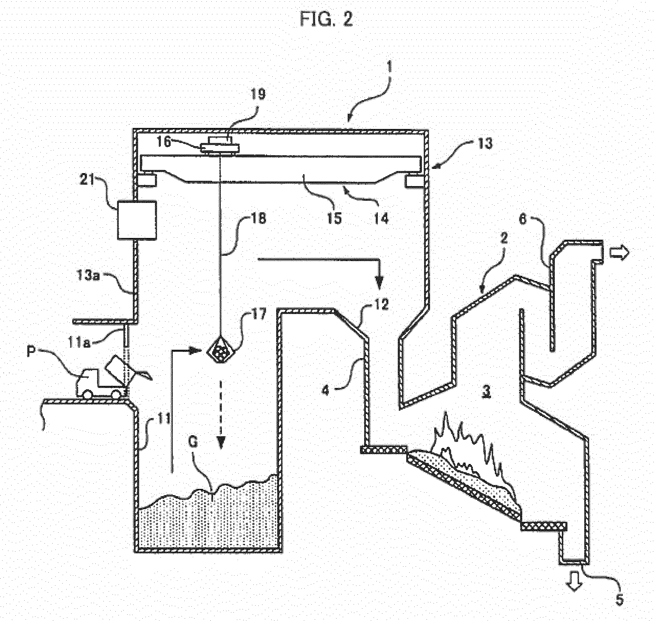

The following description will discuss an embodiment of the present invention with reference to Figs. 1 through 9. The present invention relates to a calculation device and the like for preparing an operation schedule of a crane that transfers waste in a waste pit. Accordingly, first, a waste pit and a waste incineration plant including the waste pit will be described with reference to Fig. 2.

### [Overview of waste incineration plant]

Fig. 2 is a cross-sectional view schematically illustrating a configuration of a waste incineration plant including a waste pit. The waste incineration plant which is illustrated in Fig. 2 includes (i) a waste pit 1 for temporarily storing waste that has been brought in by a garbage truck P and (ii) an incinerator 2 for burning waste in the waste pit 1. The waste pit 1 and the incinerator 2 are connected with each other via a hopper 12 for supplying waste into the incinerator 2. Waste in the waste pit 1 is supplied to the incinerator 2 through the hopper 12 and is then burned.

A bottom of the waste pit 1 is a waste storing section 11. The garbage truck P drops waste into the waste storing section 11 via a bring-in door 11a, and the waste is stored in the waste storing section 11 (see waste G in Fig. 2).

The waste storing section 11 and the hopper 12 is covered with a building 13. In a ceiling part of the building 13, a crane 14 is provided. The crane 14 includes a girder 15, a transverse carriage 16, a bucket 17, a wire 18, and a winder 19. The girder 15 is provided so as to extend between rails (extending in a depth direction in Fig. 2) which are respectively provided on facing wall surfaces of the building 13. The girder 15 is configured to move along the rails in the depth direction in Fig. 2. The transverse carriage 16 is provided on the girder 15, and is configured to move on the girder 15 in the left-right direction in Fig. 2 (i.e., in a direction that is perpendicular to a moving direction of the girder 15). On the transverse carriage 16, the winder 19 (e.g., a winch) is placed, and the bucket 17 for grabbing waste G is provided at an end of the wire 18 that extends from the winder 19. The bucket 17 can open and close.

As such, the girder 15 can be moved in the depth direction in Fig. 2 and the transverse carriage 16 can be moved in the left-right direction in Fig. 2. Therefore, a combination of these movements enables the bucket 17 to move to an arbitrary location in the waste storing section 11. The wire 18 is extended from the winder 19 so as to drop the bucket 17, and thereby the bucket 17 can grab waste G in the waste storing section 11. The waste G thus grabbed can be restacked on another location in the waste storing section 11 or put into the hopper 12 by control of motions of the girder 15, the transverse carriage 16, the bucket 17, and the winder 19.

Such motion control of the crane 14 can be carried out manually in a control room 21 that is provided in a lateral wall part 13a of the building 13 so that the waste storing section 11 can be monitored. Alternatively, the motion control of the crane 14 can be automatically carried out by a crane control device as later described.

In Fig. 2, only one crane 14 is illustrated. Note, however, that it is possible to provide a plurality of cranes 14. In a case where the plurality of cranes 14 are provided, it is possible to carry out mixing more sufficiently, as compared with a case where only one crane 14 is provided. For example, in a case where two cranes 14 are provided, one of the two cranes 14 can be used exclusively for mixing, while the other is used to restack waste and to put waste into the hopper 12.

The incinerator 2 includes a combustion chamber 3, a waste guiding path 4, an ash outlet 5, and a flue 6. The waste G which has been put into the hopper 12 is supplied to the combustion chamber 3 through the waste guiding path 4 and then burned in the combustion chamber 3. Ash generated by incineration is taken out via the ash outlet 5, and smoke generated by incineration is discharged through the flue 6. Note that, although not illustrated, a boiler is provided in the incinerator 2. Heat generated by burning the waste G is supplied to the boiler, and electricity is generated with use of vapor generated in the boiler.

### [Waste storing section]

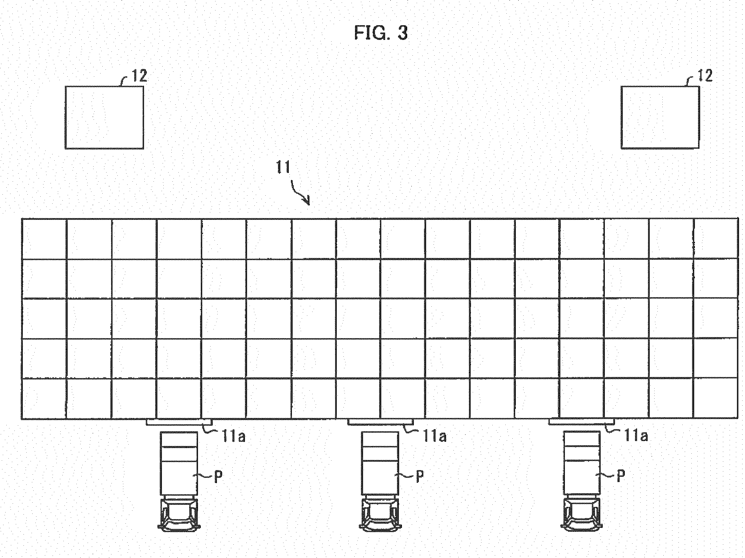

Next, the following description will discuss details of the waste storing section 11 with reference to Fig. 3. Fig. 3 is a view illustrating the waste storing section 11 and the hopper 12 seen from above. The waste storing section 11 illustrated in Fig. 3 has a horizontally-long rectangular shape. Three bring-in doors 11a are provided on one of longer sides of the waste storing section 11, and two hoppers 12 are provided on the opposite longer side. The hoppers 12 can be used to supply waste into the same incinerator 2 or can be used to supply waste into respectively different incinerators 2. That is, in the waste incineration plant in accordance with Embodiment 1, it is possible to provide a plurality of incinerators 2.

In management of the waste pit 1, it is important to appropriately mix and transfer waste by efficiently operating the crane 14 in the waste storing section 11 that has a limited capacity. Note that a shape of the waste storing section 11 is not limited to the rectangular shape and can be a square shape. Moreover, a location, the number of pieces, and a shape of the hopper 12 are also not limited to particular ones.

### [Crane control device]

Next, the following description will discuss, with reference to Fig. 1, the crane control device which prepares an operation schedule of the crane 14 so as to automatically operate the crane 14. Fig. 1 is a block diagram illustrating an example configuration of main parts in a crane control device (calculation device) 50. Note that the crane control device 50 can be provided in the control room 21 or can be provided elsewhere.

As illustrated in Fig. 1, the crane control device 50 includes (i) a control section 51 which comprehensively controls sections included in the crane control device 50 and (ii) a storage section 52 which stores various kinds of data used by the crane control device 50. Moreover, the crane control device 50 includes (i) an input section 53 which accepts an input from a user with respect to the crane control device 50, (ii) a communication section 54 with which the crane control device 50 communicates with another device, and (iii) a display section 55 which displays an image in accordance with control by the control section 51. Note that the display section 55 can be integrated into the crane control device 50 or can be provided externally.

Further, the control section 51 includes a constraint setting section 61, a first-generation gene generating section 62, an optimization calculation section 63, a pit state predicting section 64, a pit model generating section 65, a crane control section 66, a put-into-hopper instruction detecting section 67, and a pit state monitoring section 68. The storage section 52 stores an operation schedule 71 and pit state information 72.

The constraint setting section 61 sets constraints on an optimization operation that is carried out by the optimization calculation section 63. The constraints set by the constraint setting section 61 include an area setting in the waste pit 1 and an acceptance setting for brought-in waste. Moreover, the constraint setting section 61 calculates the number of mixing actions that can be carried out during a period (hereinafter, referred to as "schedule period") for which an operation schedule is to be prepared, and notifies the first-generation gene generating section 62 of the number of mixing actions thus calculated. Details of those processes will be described later.

The first-generation gene generating section 62 generates a gene group including genes each of which indicates an operation pattern defining movement, opening, and closing of the crane 14 during the schedule period. Each of the genes includes (i) location information indicative of a location at which waste is grabbed during the schedule period and (ii) location information indicative of a location at which the waste is released during the schedule period. A sequence of pieces of the location information in the gene represents a transition of locations of the crane 14 (more specifically, locations of the bucket 17) (details of the gene will be described later).

The optimization calculation section 63 calculates, under the constraints set by the constraint setting section 61, an operation pattern of the crane 14 by an optimization operation such that waste in the waste pit 1 will be in a predetermined mixed state. Specifically, the optimization calculation section 63 selects, based on a genetic algorithm, a gene whose fitness has been improved. Note that the genetic algorithm is carried out by repeating (i) evaluation of fitness based on an evaluation function with respect to each of genes included in a gene group generated by the first-generation gene generating section 62 and (ii) update of the gene group based on the evaluation result. The evaluation function is a function with which evaluated fitness of a gene increases as a state of waste in the waste pit 1 becomes closer to a predetermined state after the crane 14 is operated in an operation pattern indicated by the gene (details of the evaluation function will be described later). From this, a gene is selected which indicates an operation pattern with which an initial state (i.e., a state indicated by pit state information 72) of waste is caused to become or become closer to a predetermined state. The optimization calculation section 63 causes the storage section 52 to store the selected gene as the operation schedule 71.

The pit state predicting section 64 generates pit state prediction information that indicates a state of waste in the waste storing section 11 which state is obtained after the crane 14 is operated in accordance with an operation pattern indicated by a gene selected by the optimization calculation section 63. The pit state prediction information thus generated is used when the pit model generating section 65 generates a pit model image.

Note that correspondences between (i) actions of the crane 14 and (ii) changes in heights of waste and the numbers of mixing actions are stored in advance as models. For example, it is possible to use a model in which a height decreases by 0.5 m per action of grabbing waste, and the height increases by 0.5 m and the number of mixing actions at a released location increases by one per action of releasing waste. From this, it is possible to generate pit state prediction information by calculating estimated values of heights of waste and the numbers of mixing actions at respective locations in the waste storing section 11 at a time point when operation ends which is carried out in accordance with the operation pattern indicated by the gene that has been generated by the optimization calculation section 63.

The pit state prediction information is used also in a case where influences of bringing waste into the waste pit 1 and of putting waste of the waste pit 1 into the hopper 12 are reflected in the optimization operation (details of the pit state prediction information will be described later).

The pit model generating section 65 generates a pit model image with use of pit state prediction information which has been generated by the pit state predicting section 64. The pit model image three-dimensionally indicates a state of waste in the waste pit 1 which state is obtained after the crane 14 is operated in accordance with an operation pattern indicated by a gene that has been generated by the optimization calculation section 63. The pit model generating section 65 causes the display section 55 to display the pit model image thus generated.

The crane control section 66 controls the crane 14 to operate in accordance with an operation pattern indicated by a gene that has been generated by the optimization calculation section 63. In a case where the put-into-hopper instruction detecting section 67 has detected an instruction on putting waste into the hopper 12, the operation according to the operation schedule is halted, and waste is put into the hopper 12.

The put-into-hopper instruction detecting section 67 detects an instruction on putting waste into the hopper 12 and notifies the crane control section 66 of the instruction. Specifically, the put-into-hopper instruction detecting section 67 detects that an instruction on putting waste into the hopper 12 has been given in a case where the put-into-hopper instruction detecting section 67 has received, via the communication section 54, a notice from a hopper height notifying device 30 which gives notice indicating that a height of waste in the hopper 12 has become equal to or lower than a predetermined lower limit.

The pit state monitoring section 68 monitors a state in the waste pit 1, in particular, a height of waste in the waste storing section 11 and the number of mixing actions. The pit state monitoring section 68 manages the waste storing section 11 which has been divided into a plurality of sections (details will be described later). The pit state monitoring section 68 generates pit state information which indicates a height of waste and the number of mixing actions in each of the sections, and causes the storage section 52 to store the pit state information thus generated. In a case where waste is restacked or mixed by the crane 14, the pit state monitoring section 68 updates the height of waste and the number of mixing actions which are stored in the storage section 52. Note that the height of waste can be measured based on a length of the wire 18 with which length the bucket 17 has reached the waste. The number of mixing actions is increased by one for a section in which the crane 14 has carried out an action of releasing the waste. That is, "mixing" in Embodiment 1 indicates a process in which the crane 14 grabs and lifts waste and then drops the waste inside the waste storing section 11 by opening the bucket 17 of the crane 14. Note that a location at which waste is grabbed can be identical with a location at which the waste is released. This is because a degree of mixing waste increases due to tearing of a garbage bag and the like even in a case where the waste is released at the same location. The height of waste can alternatively be detected by (i) analyzing an image taken inside the waste storing section 11 or (ii) using a sensor or the like.

The operation schedule 71 is information indicating a schedule (i.e., operation pattern) based on which the crane 14 is operated during the schedule period. As above described, a gene generated by the optimization calculation section 63 constitutes the operation schedule 71.

The pit state information 72 is information indicating a state in the waste pit 1, in particular, a height of waste in the waste storing section 11 and the number of mixing actions. As above described, the pit state information 72 is generated and updated by the pit state monitoring section 68.

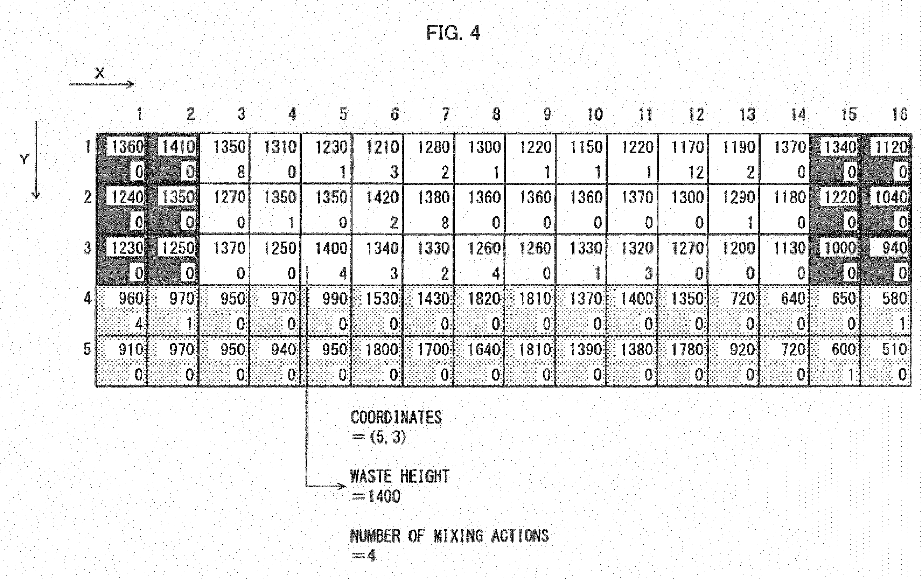

The pit state information 72 can be, for example, information as shown in Fig. 4. Fig. 4 is a view showing an example of the pit state information 72. In the pit state information 72 shown in Fig. 4, the waste storing section 11 is divided into 80 sections in a matrix of 5 (longitudinal) × 16 (transverse), and a height of waste and the number of mixing actions in each of the sections are indicated. In each of the sections, a numerical value in an upper part indicates a height of waste, and a numerical value in a lower part indicates the number of mixing actions. Locations of the respective sections can be represented by (X,Y) coordinates (here, X = 1, 2, ... , 16, and Y = 1, 2, ... , 5).

By referring to the pit state information 72, it is possible to identify a height of waste and the number of mixing actions at each of the locations in the waste storing section 11. For example, in a section located at coordinates (5,3), the height is 1400 (cm), and the number of mixing actions is 4. In this example, longitudinal and transverse dimensions of one section are equivalent to those of a range of one grab of the crane 14. Note, however, that a size of each section is not limited to this example, and the size can be, for example, a half of the size of this example.

The crane control section 66 controls the crane 14 to carry out a waste grabbing action and a waste releasing action at each of locations represented by the respective pairs of coordinates. That is, a moving unit of the crane 14 in a longitudinal direction corresponds to a longitudinal length of one section, and a moving unit of the crane 14 in a transverse direction corresponds to a transverse length of one section. Note that the crane 14 can be moved in a moving unit shorter than (e.g., 1/2 of) the longitudinal and transverse dimensions of one section illustrated in Fig. 4.

In Fig. 4, area settings (later described) are indicated by different colors. Specifically, a range of 1 ≤ X ≤ 15, 1 ≤ Y ≤ 3 is a mixing area for use in mixing waste. A range of 1 ≤ X ≤ 15, 4 ≤ Y ≤ 5 is an acceptance area for accepting waste that has been brought in. A range 1 ≤ X ≤ 2, 1 ≤ Y ≤ 3 and a range 15 ≤ X ≤ 16, 1 ≤ Y ≤ 3 are non-mixing areas which are not used in mixing. Note that the non-mixing areas can be arbitrarily set and are not limited to this example. For example, the non-mixing area can be freely set by the user.

### [Area setting]

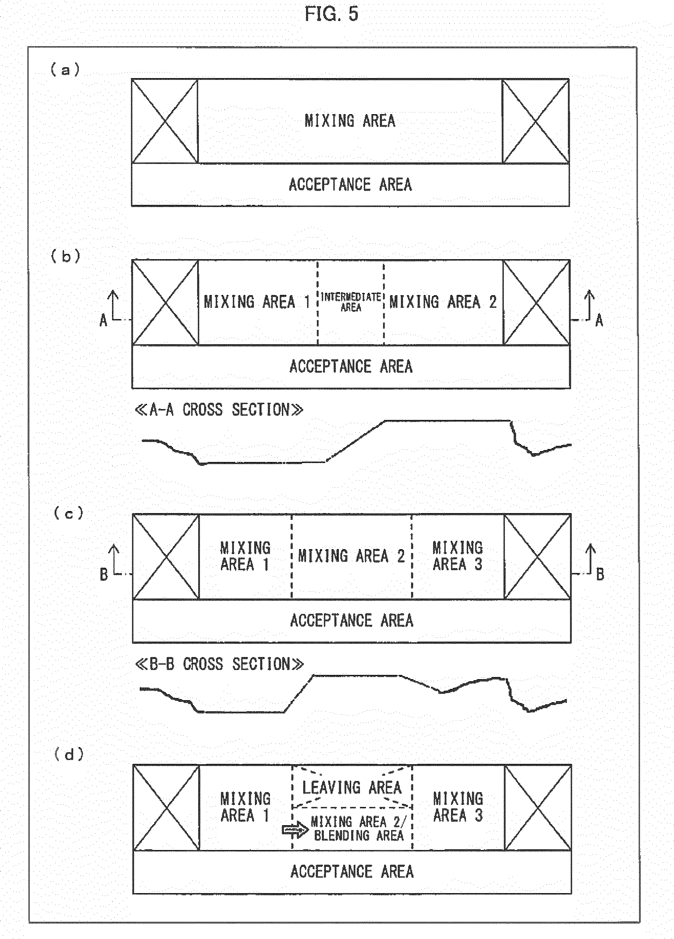

The following description will discuss how area setting is carried out, with reference to Fig. 5. Fig. 5 is a view illustrating an example of setting areas. In an example illustrated in (a) of Fig. 5, a mixing area, an acceptance area, and non-mixing areas (indicated by x-marks) are set in the waste storing section 11 which has a rectangular shape when viewed from above. Note that the acceptance area is provided on a bring-in door 11a side. Waste which has been brought in by the garbage truck P is dropped into the acceptance area (see Fig. 3), and therefore this area is dealt with as a non-mixing area at least during a period in which waste is to be brought in. The acceptance area and the mixing area can be partitioned by a bank or the like.

In the example illustrated in (a) of Fig. 5, only one mixing area is provided. According to the configuration, in a case where the constraint setting section 61 employs this area setting, the optimization calculation section 63 calculates an optimal operation pattern of the crane 14 in this mixing area.

Alternatively, it is possible to set a plurality of mixing areas as illustrated in (b) through (d) of Fig. 5. In an example illustrated in (b) of Fig. 5, the mixing area illustrated in (a) of Fig. 5 is divided into two mixing areas, i.e., mixing areas 1 and 2, and an intermediate area is set between those two mixing areas. The intermediate area and each of the mixing areas can be partitioned by a bank or the like.

In a case where the two mixing areas are thus set, it is possible to restack waste from one of the two mixing areas to the other mixing area. Here, in a lower side part of (b) of Fig. 5, a cross-sectional view of the waste storing section 11 taken along the line A-A is shown. As indicated by the cross-sectional view, in the example illustrated in (b) of Fig. 5, the whole waste in the mixing area 1 can be restacked in the mixing area 2. Subsequently, the waste restacked in the mixing area 2 is then returned to the mixing area 1 and the waste is finally leveled to become even. From this, it is possible to mix not only waste in a surface but also waste at a deep location. Moreover, as illustrated in the cross-sectional view, an upper surface of waste in the intermediate area sometimes inclines. In a case where the bucket 17 is dropped onto such an inclined part, it sometimes happens that the bucket 17 is tilted and therefore cannot grab waste. In view of this, it is preferable that the intermediate area is also dealt with as a non-mixing area.

In an example illustrated in (c) of Fig. 5, the mixing area illustrated in (a) of Fig. 5 is divided into three mixing areas, i.e., mixing areas 1 through 3. In a case where the three mixing areas are thus set, waste in the mixing area 1 and waste in the mixing area 3 can be blended in the mixing area 2 which is located between the mixing area 1 and the mixing area 3. Moreover, as with the example illustrated in (b) of Fig. 5, it is possible to restack the whole waste from the mixing area 1 to the mixing area 3 (see a cross-sectional view taken along the line B-B), and it is also possible to return the waste restacked in the mixing area 3 to the mixing area 1.

In an example illustrated in (d) of Fig. 5, a half of the mixing area in (c) of Fig. 5 is set as a leaving area. The leaving area is an area for leaving waste which has been stacked in the area as it is for a predetermined period (e.g., 2 to 3 days). The leaving area can be considered as a limited-time non-mixing area. Mixing in the example illustrated in (d) of Fig. 5 is substantially identical with that in the example illustrated in (c) of Fig. 5, except that mixing is not carried out in the leaving area until a predetermined period elapses. Note that, in the examples illustrated in (c) and (d) of Fig. 5 also, it is of course possible that a boundary part between the mixing areas or a boundary part between the mixing area and the leaving area is set as an intermediate area.

### [Genetic algorithm]

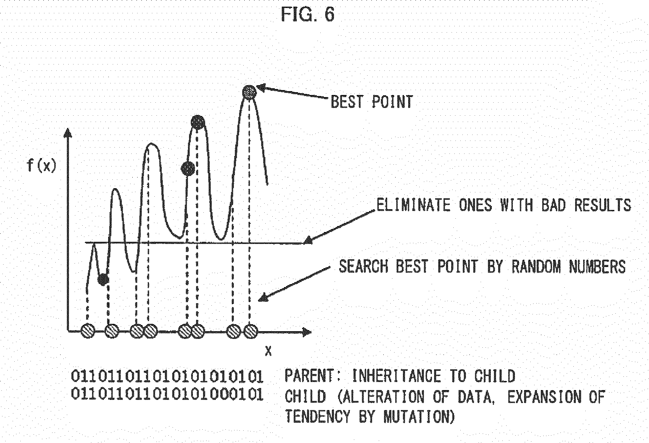

An optimal operation pattern of the crane 14 is calculated by the optimization calculation section 63 with use of a genetic algorithm. The following description will discuss, with reference to Fig. 6, an overview of an optimization operation carried out by the optimization calculation section 63 with use of a genetic algorithm. Fig. 6 is a view for explaining an overview of an optimization operation carried out with use of a genetic algorithm.

Here, in the genetic algorithm, a plurality of "individuals" are generated each of which is a candidate solution represented as a gene. Then, an optimal solution is searched by repeating a sequential processes of (i) preferentially selecting individuals having high fitness which is calculated based on an evaluation function f(x) of fitness, (ii) generating next-generation individuals by applying crossover, mutation, and the like to the selected individuals, and (iii) evaluating fitness of each of the generated individuals.

In Fig. 6, the function f(x) is an evaluation function, "011011011010101010101" is a first-generation (parent) gene, and "011011011010101000101" is a second-generation (child) gene. Note that, in the crane control device 50, a first-generation gene is generated by the first-generation gene generating section 62, and genes of second and subsequent generations are generated by the optimization calculation section 63.

Each of those genes indicates an operation pattern of the crane 14, more specifically, a transition of grabbing locations and releasing locations in a case where the crane 14 repeats motions of grabbing, transferring, and releasing waste. Note that used genes only need to indicate an operation pattern of the crane 14 and are not limited to those represented in binary as in the above case. However, in a case where mutation and crossover are applied, it is preferable to employ a binary representation.

It is possible that the first-generation gene generating section 62 generates data including a series of pairs of coordinates indicating locations at which the crane 14 (more specifically, the bucket 17) grabs and releases waste, converts the data into a binary representation, and thus generates first-generation genes. Specifically, in a case where the waste storing section 11 is divided into a plurality of sections as illustrated in Fig. 4, locations at which the crane 14 grabs and releases waste can be represented by (X,Y) coordinates. From this, for example, it is possible to represent, with coordinates (6,3) and coordinates (9,2), an operation pattern in which waste is grabbed at a location of (6,3) and the waste is released at a location of (9,2). Note that the number of coordinates to be put together depends on a length of schedule period and on the number of mixing actions that can be carried out during the schedule period. Alternatively, instead of the coordinates (X,Y), it is possible to employ coordinates (X,Y,Z) that include a value of Z representing a height of a location at which waste is grabbed.

### [Evaluation function]

The optimization calculation section 63 calculates an optimal operation pattern (which can be said also as simulation pattern) of the crane 14. Therefore, as the evaluation function f(x), a function is used with which fitness increases as a state of waste in the waste storing section 11 becomes closer to an ideal state after operation is carried out in an operation pattern indicated by a gene to be evaluated.

For example, it is possible to employ, as the evaluation function f(x), a function with which fitness increases as a variance from a criterion value of the number of mixing actions becomes smaller. In this case, the waste storing section 11 is divided into a plurality of sections as illustrated in Fig. 4, and a criterion value is set which corresponds to a period during which mixing can be carried out. Note that details of setting a criterion value will be described later. Then, a function f(x) is set with which fitness increases as a variance of the number of mixing actions in each of the sections becomes closer to the criterion value. Alternatively, it is possible to set a function f(x) with which fitness increases as the number of sections decreases in which the number of mixing actions is zero.

Alternatively, for example, it is possible to employ, as the evaluation function f(x), a function with which fitness increases as a variance from a criterion value of a height of waste becomes smaller. In this case, the waste storing section 11 is divided into a plurality of sections as illustrated in Fig. 4, and an average of heights of waste in the respective sections is set as a criterion value. Then, a function f(x) is set with which fitness increases as a variance from the criterion value of the height of waste in each of the sections becomes smaller.

Still alternatively, for example, it is possible to employ, as the evaluation function f(x), a function with which fitness increases as a total moving distance of the crane 14 in a schedule period becomes shorter. Alternatively, the evaluation function f(x) can be a function with which fitness increases as a total amount of electric power consumed by the crane 14 becomes smaller. Here, in a case where the crane 14 is driven, electric power is mainly consumed due to movement by the girder 15, movement by the transverse carriage 16, and lifting and dropping of the bucket 17 by the winder 19, and the electric power consumption varies among those driven parts. In view of this, weights corresponding to respective amounts of electric power consumed by the driven parts are assigned to a moving distance by the girder 15, a moving distance by the transverse carriage 16, and a winding distance of the winder 19. Then, the evaluation function f(x) is set as a function with which fitness increases as the sum of those distances thus weighted becomes smaller.

Note that it is possible to employ one of the above described evaluation functions alone or it is possible to employ two or more of the above described evaluation functions in combination. In a case where two or more of the evaluation functions are used in combination, weighting can be set for each of the evaluation functions. For example, it is possible to employ a configuration in which a weight assigned to an evaluation function in regard to a variance of the number of mixing actions is the heaviest, a weight assigned to an evaluation function in regard to a variance of a height is the second heaviest, and a weight assigned to an evaluation function in regard to a moving distance (i.e., consumed power) of the crane 14 is the lightest. Alternatively, with use of a fuzzy algorithm, it is possible to obtain an optimal solution while taking into consideration the three factors, i.e., the variance of the number of mixing actions, the variance of the height, and the moving distance (i.e., consumed power).

Alternatively, it is possible to employ a configuration in which the schedule period is divided into a plurality of time zones, and evaluation functions are used which define different ideal states (predetermined states) for the respective time zones. For example, in a case where mixing is carried out for 4 hours, an optimization operation of a gene in 2 hours of the first half can be carried out while setting an ideal state (here, if a subject state is caused by a gene to become closer to the ideal state, fitness of such a gene is considered to be high) to be a state in which an average of heights in respective sections in one of two mixing areas is equal to or lower than a predetermined level. Then, an optimization operation of the gene in 2 hours of the second half can be carried out while setting an ideal state to be a state in which an average of heights in respective sections in the other of two mixing areas is equal to or lower than a predetermined level. From this, it is possible to prepare an operation schedule for optimized operation in which waste in a first one of the two mixing areas is restacked in a second one of the two mixing areas, and then the waste in the second one of the two mixing areas is returned to and stacked in the first one of the two mixing areas. It is possible to prepare an operation schedule which includes actions (e.g., restacking of waste from an acceptance area to a mixing area, putting waste from the mixing area into the hopper 12, and the like) other than mixing by defining time zones for carrying out those actions.

### [Mixing of waste at deep location]

As described in "Technical Problem", in recent years, waste storing sections in waste incineration plants are becoming smaller and waste tends to be stacked in smaller spaces. In such a case, it is preferable to mix waste up to a certain degree of depth.

In view of this, it is possible that a height of waste is classified into a plurality of levels, and a gene is updated so that the number of mixing actions in each of the height levels becomes the same. In this case, it is possible to set sections into which waste in the waste storing section 11 is three-dimensionally divided in the horizontal direction and in the vertical direction. Here, a height of each of the sections can be a height level by which the crane 14 can grab waste in one grab.

In a case where an average of the numbers of mixing actions for respective height levels is used as the number of mixing actions at each location indicated by each pair of coordinates, it is possible to prepare an operation schedule while taking into consideration the height (depth) of waste with use of an evaluation function with which fitness increases as a variance of the number of mixing actions from the criterion value becomes smaller.

For example, in a case where the crane 14 can grab waste by a height of 0.5 m in one grab, a height of one section can be set to 0.5 m. In this case, waste with a height of 1.5 m is divided into three levels (i.e., upper, middle, and lower) of sections in a height direction. In this example, in a case where the numbers of mixing actions in the upper level section, the middle level section, and the lower level section at a location of coordinates (X,Y) are 3 times, 2 times, and 1 time, respectively, the number of mixing actions at this location can be set to 2 times, which is an average of those numbers of mixing actions.

Alternatively, it is possible to use the numbers of mixing actions as they are in the respective sections aligned in the height direction. In this case, for example, it is possible that a criterion value is an average of the numbers of mixing actions in the upper level section, the middle level section, and the lower level section at each of the all locations represented by the coordinates, and a gene is evaluated with the above described evaluation function(s).

Note that, in a case where waste is highly stacked, a lower layer of waste cannot be mixed in a state in which an upper layer of waste exists. For example, in a case where a height of waste is divided into three levels, i.e., upper, middle, and lower levels, waste at the middle and lower levels cannot be mixed, unless waste at the upper level is restacked in another location or the like. In a case where waste of another location is further stacked on top, waste in the lower level is to sink deeper, and this makes it difficult to mix the waste at such a deeper location.

Therefore, in a case where waste at a deep location is mixed, it is preferable to set a plurality of mixing areas as illustrated in (b) through (d) of Fig. 5 and also to set not to carry out restacking (mixing) in the same mixing area. For example, in a case where a plurality of mixing areas are set as illustrated in (b) of Fig. 5, lower fitness can be assigned to a gene which indicates an operation pattern in which waste grabbed in a mixing area is released in the same mixing area. From this, a gene indicating an operation pattern in which waste grabbed in a mixing area is released in another mixing area is more likely to survive.

### [Relation between area setting and genetic algorithm]

The area setting is carried out based on the number of division n (n = 1, 2, 3, or 4) which is inputted by the user with use of the input section 53. In a case where the number of division n which has been inputted is 1, the constraint setting section 61 sets one mixing area to an area other than a non-mixing area (unused area) and an acceptance area, as illustrated in (a) of Fig. 5. Note that the mixing area can be represented by coordinates (X,Y) (see Fig. 4), and therefore it is possible to prepare an operation schedule of mixing which is aimed at only the mixing area by storing coordinates of the mixing area and by not employing coordinates except for those stored. Alternatively, it is possible to employ a configuration in which coordinates of the non-mixing area and the acceptance area are employed but an evaluation value (which indicates fitness calculated with the evaluation function) of an operation pattern including those coordinates is notably lowered. According to such a configuration, it is possible to prepare, without losing versatility of the genetic algorithm, an operation schedule of mixing which is aimed at only the mixing area by selecting a gene that does not include location information within the non-mixing area.

The same applies to a case in which the number of division n which has been inputted is 2, and it is possible to prepare an operation schedule of mixing which is aimed at only the two mixing areas by storing coordinates of the mixing areas and by not employing coordinates except for those stored. Alternatively, it is possible to prepare an operation schedule of mixing which is aimed at only the two mixing areas by a method as follows: that is, in a case where coordinates other than those of the mixing areas are selected, a predetermined value is added to the coordinates so that the coordinates are converted into coordinates within the mixing areas. Alternatively, it is possible to employ a configuration in which coordinates of the non-mixing area and the acceptance area are employed but an evaluation value of an operation pattern including those coordinates is notably lowered.

The same applies to cases where the number of division n is 3 and 4. Note, however, that, in a case where a blending area and a leaving area are set as illustrated in (d) of Fig. 5, it is necessary to carry out processes in consideration of those areas. Specifically, in a case where the blending area is set, an order of mixing is determined in advance, and mixing is carried out in the order thus determined. For example, it is possible to employ a configuration as follows: that is, (i) an order is determined in which waste is grabbed in the mixing area 1, then the waste is released in the blending area, then waste is grabbed in the mixing area 2, and the waste is released in the blending area, and (ii) fitness of a gene indicating an operation pattern that does not conform to the order is lowered. The leaving area is exempted from mixing, as with the non-mixing area, during a predetermined period, and is then dealt with as a mixing area or a blending area after the predetermined period elapses.

### [Relation between acceptance setting and genetic algorithm]

In accordance with a setting for accepting waste, the constraint setting section 61 calculates the number of mixing actions that can be carried out during a schedule period, and notifies the first-generation gene generating section 62 of the number of times thus calculated. This makes it possible to generate a first-generation gene in which a length of the schedule period and whether or not waste is brought in during the schedule period are reflected. Moreover, the constraint setting section 61 generates a constraint in accordance with a waste acceptance setting, and the optimization calculation section 63 calculates an optimal operation pattern of the crane 14 based on the genetic algorithm under the constraint.

Specifically, the constraint setting section 61 classifies the schedule period into daytime of weekday (which is a time zone in which waste is to be brought in) and nighttime and holiday (which is a time zone in which waste is not to be brought in). A time that can be used for mixing during the daytime of weekday is a time obtained by excluding, from the daytime of weekday, a time required for restacking waste from the acceptance area to the mixing area and a time required for putting waste of the mixing area into the hopper 12. For example, assuming that waste is put into the hopper 12 four times per hour and an average time required for one putting-in is 4 minutes, a time which can be used for restacking and mixing is 44 minutes. From this, assuming that an average time required for one mixing is 2 minutes, the number of mixing actions is up to 22 times. Note however that, actually, it is necessary to carry out restacking such that a height of waste in the acceptance area does not become excessively high, and therefore the number of times mixing can be carried out becomes smaller. For example, assuming that restacking is carried out 8 times and an average time required for one restacking is 3 minutes, the number of times mixing can be carried out is 10 times.

Meanwhile, in the nighttime and holiday, waste will not be newly put into the acceptance area, and it is unnecessary to carry out restacking. Therefore, the whole time excluding the time required for putting waste into the hopper 12 can be used for mixing. Moreover, the acceptance area can be used for mixing. Note, however, that it is necessary to restack the waste from the acceptance area to the mixing area by a time point at which waste will be brought in next time. The time point by which such restacking needs to be finished can be set by the user (i) in a time zone before a time corresponding to a time point (e.g., 9:00) at which waste was accepted on the previous day and (ii) on an hourly basis with reference to the time point (e.g., 9:00) at which waste was accepted on the previous day.

As such, the constraint setting section 61 classifies the schedule period into the daytime of weekday and the nighttime and holiday, and determines the number of mixing actions in accordance with the classifications. For example, the following description will assume a case where an operation schedule for 24 hours is prepared at 9 a.m. on Monday, that is, an operation schedule up to 9 a.m. on Tuesday is prepared. In this case, assuming that waste is to be brought in during a period from 9 a.m. to 10 p.m., a mixing time in the period from 9 a.m. to 10 p.m. is to be a time excluding a time for restacking and a time for putting waste into the hopper 12. For example, in a case where waste is put into the hopper 12 four times per hour and a time required for one putting-in is 4 minutes and restacking is carried out eight times per hour and a time required for one restacking is 3 minutes as in the above example, mixing can be carried out 10 times per hour. Accordingly, the constraint setting section 61 sets the number of mixing actions during 13 hours from 9 a.m. to 10 p.m. to be 130 times. From this, the first-generation gene generating section 62 sets a length of a gene corresponding to the period, that is, the number of locations indicated by coordinates (X,Y) constituting the gene to be 260 (in this case, the number of pairs of grabbing locations and releasing locations is 130 pairs). According to the configuration, then, the optimization calculation section 63 selects a gene for optimally carrying out mixing 130 times during 13 hours from 9 a.m. to 10 p.m.

Moreover, the determination of the number of mixing actions leads to determination of a criterion value for the evaluation function f(x). Specifically, the optimization calculation section 63 obtains pit state information 72 from the pit state monitoring section 68, and calculates a total number of mixing actions in the mixing area based on the pit state information 72. Then, the criterion value is obtained by dividing, by the number of sections in the mixing area, the sum of the above calculated total number and the number of mixing actions during the above period. For example, in the example illustrated in Fig. 4, the total number of mixing actions in the mixing area is 61, and the number of sections in the mixing area is 45. From this, in a case where the number of mixing actions is 130, the criterion value is 4.24.

Meanwhile, in 11 hours from 10 p.m. to 9 a.m. of the next day, a mixing time is a time excluding a time required for putting waste into the hopper 12. For example, in a case where waste is put into the hopper 12 four times per hour and a time required for one putting-in is 4 minutes as in the above example, mixing can be carried out 22 times per hour. Accordingly, the constraint setting section 61 sets the number of mixing actions during this period to be 242 times. From this, the first-generation gene generating section 62 sets a length of a gene corresponding to the period, that is, the number of locations indicated by coordinates (X,Y) constituting the gene to be 484.

In a case where the acceptance area is used for mixing, the optimization calculation section 63 selects a gene including location information of both the acceptance area and the mixing area. For example, in the example illustrated in Fig. 4, the total number of mixing actions in the mixing area and the acceptance area is 68, and the number of sections in the mixing area and the acceptance area is 75. From this, in a case where the number of mixing actions is 242, the criterion value is 3.22. Then, a gene including location information of both the mixing area and the acceptance area is selected.

Further, in a case where a constraint is set which defines that a height of waste in the acceptance area should not be greater than a predetermined level at a time point of 9 a.m. which is a time to start bringing in waste, the optimization calculation section 63 uses an evaluation function with which fitness is heightened in a case where the constraint is satisfied.

Note that contents of the optimization operation can vary for each time zone. For example, in the daytime of weekday in which waste is to be brought in, a time that can be assigned to mixing is short and the acceptance area cannot be used for mixing. Therefore, it is possible to carry out an optimization operation for homogenizing the number of waste mixing actions in surface portions. Meanwhile, in the nighttime and holiday, it is possible to carry out an optimization operation for homogenizing the number of mixing actions while including waste at deep locations (for details, see "Mixing of waste at deep location").

### [Pit model image]

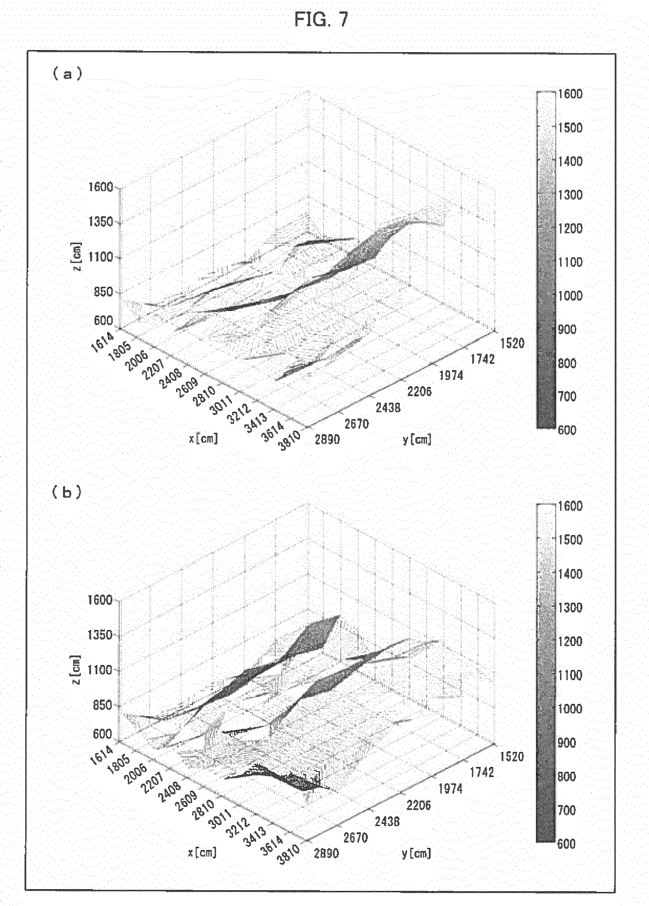

The following description will discuss, with reference to Fig. 7, details of a pit model image which is generated by the pit model generating section 65 and is displayed on the display section 55. Fig. 7 is a view illustrating an example of a pit model image. The pit model image illustrated in Fig. 7 is a model image which three-dimensionally represents a state of waste in the waste storing section 11. Specifically, (a) of Fig. 7 illustrates a state before mixing is started, and (b) of Fig. 7 illustrates a state (predicted state) after the crane 14 is operated in an operation pattern indicated by a gene that has been generated by the optimization calculation section 63. Moreover, in the pit model image, different numbers of mixing actions are indicated by respective different colors, and this makes it possible to confirm at a glance whether or not waste is homogeneously mixed.

The pit model image shown in (a) of Fig. 7 can be generated with use of pit state information 72. Specifically, the pit model generating section 65 sets, in a three dimensional coordinate space, coordinates (x,y) corresponding to locations (X,Y) in the waste storing section 11 which are indicated by the pit state information 72. Then, for each location of the coordinates (x,y) thus set, a height z is set which corresponds to a height at the each location indicated by the pit state information 72. From this, a height at each of the locations in the waste storing section 11 is represented by coordinates (x,y,z) in the three dimensional space. The pit model image as illustrated in (a) of Fig. 7 is generated by defining line segments (contour lines) each of which connects locations of identical heights z among the locations represented by those pairs of coordinates.

Note that the line segments can be displayed in colors corresponding to ranges of heights (e.g., the color can become deeper as the height decreases as shown in a component bar chart in Fig. 7), and this makes it possible to more clearly show a distribution of heights. Moreover, different numbers of mixing actions in the sections can be displayed in corresponding colors, and this allows the user to recognize degrees of homogeneity of mixing.

Meanwhile, the pit model image illustrated in (b) of Fig. 7 is generated with a process similar to the above described process with use of pit state prediction information generated by the pit state predicting section 64 by updating the coordinates (x,y,z) in accordance with an operation schedule. It is possible to specify, based on a gene generated by the optimization calculation section 63, the number of the mixing actions carried out at each location in the waste storing section 11. Therefore, the pit state predicting section 64 updates the coordinates (x,y,z) in accordance with this mixed state, and thus generates pit state prediction information.

### [Flow of processes (from step of preparing operation schedule to step of controlling crane)]

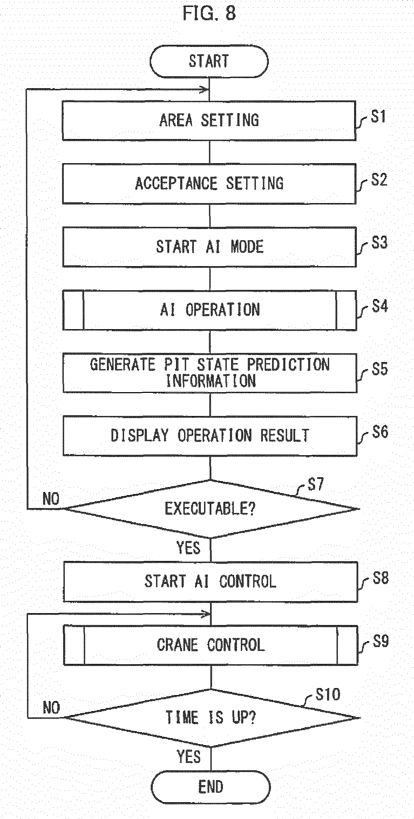

The following description will discuss, with reference to Fig. 8, a flow of processes (i.e., a method for controlling the calculation device) which are carried out by the crane control device 50. Fig. 8 is a flowchart illustrating an example of processes carried out by a crane control device 50.

First, the constraint setting section 61 carries out area setting and acceptance setting (S1, S2). Specifically, the constraint setting section 61 carries out area setting based on the number of division n (n = 1, 2, 3, or 4) which is inputted by the user with use of the input section 53. Note that, in a case where an unused area is specified, setting of unused area is also carried out. Then, acceptance setting is carried out based on a day of the week, a time zone, and a bringing-in plan which have been similarly inputted with use of the input section 53. Moreover, the constraint setting section 61 sets a schedule period in the acceptance setting. Specifically, the constraint setting section 61 sets a start time and an operation time in accordance with contents inputted by the user with use of the input section 53. The operation time can be set, for example, on an hourly basis. Alternatively, the operation time can be set on a daily basis or on a weekly basis. Further, in a case where the acceptance area is used for mixing in a time zone (nighttime, holiday) in which no waste is to be brought in, it is possible to set, in the acceptance setting, a time for finishing restacking of waste from the acceptance area that has been used for mixing to a mixing area.

Then, the constraint setting section 61 prepares a constraint in accordance with contents of the area setting and the acceptance setting, and notifies the optimization calculation section 63 of the constraint thus prepared. Specifically, the constraint setting section 61 notifies the optimization calculation section 63 of, as a constraint in relation to areas, types of set areas and information indicating a range of each of the areas (specifically, a range of coordinates). In a case where a time for finishing restacking of waste from the acceptance area to the mixing area has been set, the constraint setting section 61 notifies the optimization calculation section 63 of the time thus set. Further, the constraint setting section 61 calculates the number of mixing actions that can be carried out during a schedule period, and notifies the first-generation gene generating section 62 of the number of mixing actions thus calculated.

The optimization calculation section 63 and the first-generation gene generating section 62 which have accepted the constraint start an AI mode (S3), and carry out an AI operation (optimization operation) (S4). In the AI operation, the first-generation gene generating section 62 generates a first-generation gene that includes coordinates whose number of pieces corresponds to the number of mixing actions, and the optimization calculation section 63 selects, based on the first-generation gene, a gene that indicates an optimal operation pattern of the crane 14 (details of the AI operation will be described later). Then, the pit state predicting section 64 generates pit state prediction information that indicates a state of waste in the waste storing section 11 which state is obtained after the crane 14 is operated in accordance with an operation pattern indicated by the gene (S5).

After that, the pit model generating section 65 generates a pit model image based on the pit state prediction information, and causes the display section 55 to display the pit model image thus generated as a result of the AI operation (S6).

The user confirms validity of the generated operation schedule by checking the pit model image displayed on the display section 55 and then inputs, via the input section 53, whether or not the operation schedule is allowed to be executed. Then, the crane control section 66 determines, in accordance with the input, whether or not the operation schedule is allowed to be executed (S7). Here, in a case where the crane control section 66 has determined that the operation schedule is not allowed to executed (NO in S7), the process returns to S1, and is carried out again from the area setting.

On the other hand, in a case where the crane control section 66 has determined that the operation schedule can be executed (YES in S7), the crane control section 66 starts AI control (S8), and carries out a crane control process for operating the crane in accordance with the operation schedule (S9). Moreover, the crane control section 66 which has started the crane control process starts to monitor a time to finish (S10). Then, in a case where the crane control section 66 has determined that the time to finish has been reached (YES in S10), the process ends. Note that the time to finish is an end of the schedule period.

### [Flow of optimization operation]

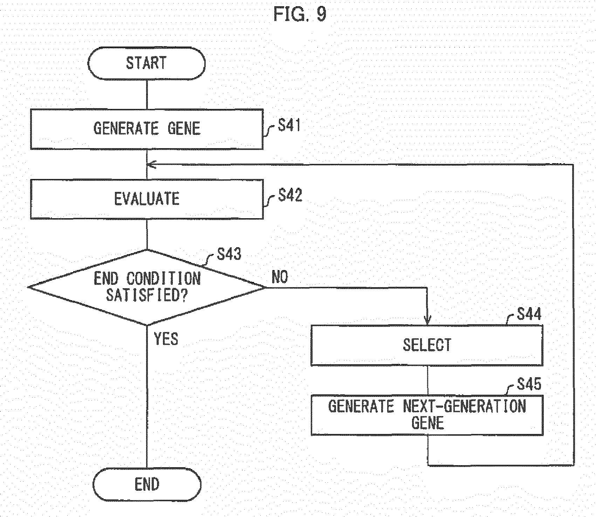

The following description will discuss, with reference to Fig. 9, details of the AI operation (optimization operation) that is carried out in the above described S4. Fig. 9 is a flowchart illustrating an example of an optimization operation (method for controlling the calculation device).

First, the first-generation gene generating section 62 generates a first-generation gene for use in calculation carried out based on the genetic algorithm (S41, first-generation gene generating step). Note that the gene is generated randomly and by a predetermined number of pieces, and thus an early generation group consisting of the predetermined number of individuals is generated. As above described, a gene is constituted by coordinates, and the number of coordinates constituting a gene is determined based on the number of mixing actions (that corresponds to the schedule period) that is notified by the constraint setting section 61.

After that, the optimization calculation section 63 carries out an optimization calculation steps of S42 to S46. Specifically, first, the optimization calculation section 63 evaluates fitness of each of the individuals (S42). This evaluation is carried out with use of the evaluation function f(x) as early described. In the evaluation function f(x), as early described, heights of respective sections and the number of mixing actions which are indicated by the pit state information 72 are reflected as criterion values. Moreover, as early described, the constraint is reflected in the evaluation.

Specifically, the optimization calculation section 63 lowers evaluated fitness of a gene that includes coordinates within an unused area that has been notified by the constraint setting section 61. In a case where the number of mixing areas notified by the constraint setting section 61 is two or more, it is possible to lower evaluated fitness of a gene that includes an operation pattern of grabbing and releasing waste in one mixing area. Further, for example, the constraint setting section 61 can notify the optimization calculation section 63 of a constraint which defines that the acceptance area is used for mixing and restacking of waste from the acceptance area to the mixing area is finished by a predetermined time. Then, in this case, the optimization calculation section 63 can carry out evaluation with use of an evaluation function which sets higher fitness with respect to a gene according to which a height of waste in the acceptance area becomes not higher than a predetermined level at the predetermined time.

Then, the optimization calculation section 63 determines whether or not an ending condition is satisfied (S43). The ending condition in this example is that there is at least one gene whose fitness is equal to or higher than a predetermined level. Here, in a case where the optimization calculation section 63 has determined that the ending condition is satisfied (YES in S43), the optimization calculation section 63 selects a gene (i.e., an individual) whose fitness is highest, and causes the storage section 52 to store the gene and outputs the gene to the pit state predicting section 64. Thus, the AI operation ends.

On the other hand, in a case where the optimization calculation section 63 has determined that the ending condition is not satisfied (NO in S43), the optimization calculation section 63 selects individuals whose fitness is not lower than a predetermined lower limit (S44), and eliminates individuals whose fitness is lower than the lower limit. Then, next-generation genes (individuals) are generated from the selected individuals (S45), and the process returns to S42. Note that, in the step of S45, mutation or crossover is applied to the selected individuals.

In the above described example, the process ends in a case where a gene is generated whose fitness is not less than a predetermined location. Note, however, that it is possible to repeat generation of a gene of next-generation up to a predetermined generation or until a predetermined time period elapses. In this case, it is possible that a gene whose fitness is highest is selected from among the generated genes, and the gene thus selected is stored as an operation schedule 71 and is outputted to the pit state predicting section 64.

### [Update of pit state]

A state of waste in the mixing area changes (i) in a case where waste is brought into the waste pit 1 at a time point during the schedule period and waste is restacked from the acceptance area to the mixing area and (ii) in a case where waste of the mixing area is put into the hopper 12. Therefore, in preparing an operation schedule, it is preferable to reflect such a change in state caused due to a factor that is out of the operation schedule.

In view of this, it is possible that the pit state predicting section 64 causes the change in state to be reflected in the pit state prediction information, and the optimization calculation section 63 selects a gene which has been optimized while setting, as an initial state, a state that is indicated by the pit state prediction information in which the change in state has been reflected. From this, it is possible to select a gene in which the change in state as above described has been reflected.

The change in state can be reflected in the pit state prediction information by, for example, modeling the change in state. For example, for a change in state caused by restacking waste from the acceptance area to the mixing area, it is possible to determine, in advance, a point in time to restack and how to carry out restacking. From this, it is possible that pit state prediction information at the point in time is generated, and influence of restacking in the aspect is reflected in the pit state prediction information thus generated.

As a specific example, it is possible to determine in advance to carry out a process of restacking waste from the acceptance area (1 ≤ X ≤ 15, 4 ≤ Y ≤ 5) to a nearest location (1 ≤ X s 15, 2 ≤ Y ≤ 3) in the mixing area at 15:00 on weekdays. By carrying out this restacking process, a height of waste in the mixing area (1 ≤ X ≤ 15, 2≤ Y ≤ 3) becomes higher by a height of the acceptance area (1 ≤ X ≤ 15, 4 ≤ Y ≤ 5) before the restacking, and the number of mixing actions with respect to the restacked waste becomes zero.

In this example, the first-generation gene generating section 62 generates a first-generation gene that corresponds to a period up to 15:00 and a first-generation gene that corresponds to a period starting from 15:00 (strictly, a period starting from a time at which restacking at 15:00 ends). Then, the optimization calculation section 63 first carries out an optimization operation with use of the first-generation gene that corresponds to the period before 15:00, and selects a gene that indicates an optimal operation schedule up to 15:00.

Next, the pit state predicting section 64 generates pit state prediction information that indicates a state of waste in the waste storing section 11 which state is obtained after the crane 14 is operated in accordance with an operation pattern indicated by the gene generated by the optimization calculation section 63. Then, the pit state predicting section 64 causes a height of waste in the mixing area (1 ≤ X ≤ 15, 2≤ Y ≤ 3) in the generated pit state prediction information to be higher by a height of the acceptance area (1 ≤ X ≤ 15, 4 ≤ Y s 5) before the restacking, and sets the number of mixing actions with respect to the restacked waste to be zero. Moreover, the pit state predicting section 64 sets a height of waste in the acceptance area (1 ≤ X ≤ 15, 4 ≤ Y ≤ 5) to be zero.

Lastly, the optimization calculation section 63 carries out an optimization operation with use of the first-generation gene that corresponds to the period starting from 15:00 (strictly, a period starting from a time at which restacking at 15:00 ends) while setting, as an initial state, a state that is indicated by the pit state prediction information in which the restacking has been reflected by the pit state predicting section 64. From this, it is possible to prepare the operation schedule in which the change in state due to the restacking has been reflected.

In a case where waste is put into the hopper 12, waste at a location of coordinates at which the number of mixing actions is not less than the predetermined value is grabbed from the mixing area and put into the hopper 12. Therefore, changes in height of waste and the number of mixing actions due to the grabbing of waste may be reflected. Note that waste to be put into the hopper 12 has preferably been sufficiently mixed. Therefore, a grabbing location is preferably a location at which the number of mixing actions is not less than a predetermined number of times. In view of this, a location at which a state is to be updated can be determined by, for example, determining and modeling in advance a rule defining that a grabbing location is a location at which the number of mixing actions is not less than the predetermined number of times and which is nearest to the hopper 12, and the like. Note that it is possible to prepare an operation schedule in which putting waste into the hopper 12 (i.e., taking waste out of the waste pit 1) and bringing waste into the waste pit 1 are both reflected.

### [Revision of operation schedule while operation schedule is executed]

An operation schedule can be revised while the operation schedule is being executed. From this, it is possible to correct deviation, from an original prediction, of change in state of waste in the waste storing section 11 due to execution of the operation schedule, and thus to make a subsequent operation schedule appropriate. For example, in a case where an operation schedule for a week is prepared and executed and operation of one day ends, it is possible to prepare a subsequent operation schedule again with use of pit state information 72 at a time point at which the operation of the one day ends.

### [Embodiment 2]

In the above embodiment, the example has been described in which an operation schedule of the crane 14 is prepared for each section. Meanwhile, in Embodiment 2, an example will be described in which the crane control device 50 prepares an operation schedule of a crane 14 for each area including a plurality of sections. Note that the same reference numerals are given to constituent members similar to those described in the above embodiment, and descriptions regarding such constituent members are omitted.

### [Example of operation schedule for each area]

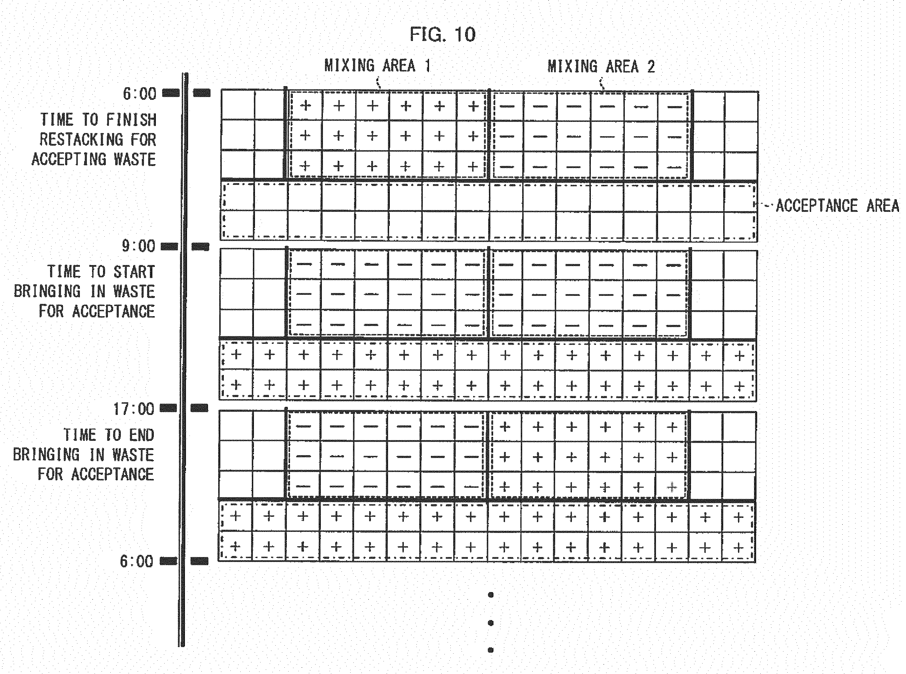

First, the following description will discuss an example of an operation schedule for each area with reference to Fig. 10. Fig. 10 is a view showing an example of an operation schedule for each area. Fig. 10 shows an operation schedule for 24 hours from 6:00 on a weekday on which waste is to be brought in to 6:00 on the next day. In the example shown in Fig. 10, two mixing areas (i.e., mixing area 1 and mixing area 2) and a single acceptance area are set. Note that, as in the example illustrated in (b) of Fig. 5, it is possible to provide an intermediate area between the two mixing areas. Similarly, it is possible to provide an intermediate area between the acceptance area and each of the mixing areas 1 and 2.

In the operation schedule of this example, a waste grabbing area and a waste releasing area are set for each time zone. In Fig. 10, a section set as a waste grabbing area is indicated by a sign "+", and a section set as a waste releasing area is indicated by a sign "-". That is, a plurality of sections which are indicated by the signs "+" and constitute the waste grabbing area are locations at which the crane 14 grabs waste. Moreover, a plurality of sections which are indicated by the signs "-" and constitute the waste releasing area are locations at which waste grabbed in the waste grabbing area is released. Note that sections (i.e., the non-mixing areas and the acceptance area at the time point of 6:00) which are free of any signs are sections at which waste grabbing operation and waste releasing operation are not carried out.

Specifically, at the time point of 6:00 which is a time to finish restacking (i.e., restacking from the acceptance area to the mixing area) for accepting waste, the mixing area 1 is set as a waste grabbing area, and the sections in the area are respectively indicated by the signs "+". Moreover, the mixing area 2 is set as a waste releasing area, and the sections in the area are respectively indicated by the signs "-". In a case where operation of the crane 14 is controlled in accordance with the operation schedule, the crane control section 66 controls the crane 14, in a time zone starting from 6:00, to carry out mixing work in which the crane 14 grabs waste in the mixing area 1 and releases the waste in the mixing area 2. Note that sections at which waste is to be grabbed in the waste grabbing area and sections at which waste is to be released in the waste releasing area are determined based on an algorithm that is set in advance as later described in "Evaluation based on evaluation function".

At a time point of 9:00 at which bringing-in of waste starts, the acceptance area is set as a waste grabbing area, and the mixing areas 1 and 2 are set as waste releasing areas. That is, in a case where motion control of the crane 14 is carried out in accordance with the operation schedule, the crane control section 66 controls the crane 14, in a time zone starting from 9:00, to carry out restacking work in which the crane 14 grabs waste in the acceptance area and releases the waste in the mixing areas 1 and 2.

At a time point of 17:00 at which bringing-in of waste ends, the acceptance area and the mixing area 2 are set as waste grabbing areas, and the mixing area 1 is set as a waste releasing area. That is, in a case where operation of the crane 14 is controlled in accordance with the operation schedule, the crane control section 66 controls the crane 14, in a time zone starting from 17:00, to carry out restacking work in which the crane 14 grabs waste in the acceptance area and releases the waste in the mixing area 1. Moreover, the crane control section 66 controls the crane 14 to carry out mixing work in which the crane 14 grabs waste in the mixing area 2 and releases the waste in the mixing area on the left thereof.

In Embodiment 2, the operation schedule 71 which is generated by the first-generation gene generating section 62 and the optimization calculation section 63 and is stored in the storage section 52 is information that indicates a waste grabbing area(s) and a waste releasing area(s) for each of those time zones. Note that it is of course possible to change settings of a waste grabbing area and a waste releasing area at any point in time other than the three time points (6:00, 9:00, 17:00) shown in Fig. 10. Alternatively, it is possible that an order of settings of a waste grabbing area and a waste releasing area is defined, and a time to apply each of the settings is not defined. In this case, one setting can be switched to a next setting after work of the one setting is finished.

In the example illustrated in Fig. 10, the acceptance area is not set as a waste releasing area in all the time zones. Note, however, that the acceptance area can be set as a waste releasing area in a time zone (in this example, 17:00 to 9:00 on the next day) in which waste is not to be brought in. From this, it is possible to carry out restacking work and mixing work with respect to waste while effectively utilizing the acceptance area.

### [Gene to be used]

In Embodiment 2, a gene used in the genetic algorithm indicates an operation pattern of the crane 14. Specifically, the gene indicates a transition of a waste grabbing area that includes grabbing locations and a waste releasing area including releasing locations in a case where the crane 14 repeats actions of grabbing, transferring, and releasing waste. In a case where mutation or crossover is applied, it is preferable that a gene is represented in binary, as with the above described embodiment. Note, however, that a representation form of the gene is not limited to a particular one.

For example, it is possible that the first-generation gene generating section 62 generates area setting information that indicates which area is set as a waste grabbing area and which area is set as a waste releasing area among a plurality of areas set in advance, and further generates data including a sequence of pieces of such area setting information. Note that each piece of area setting information only needs to include at least one waste grabbing area and at least one waste releasing area, and the number of waste grabbing areas and/or the number of waste releasing areas can be two or more in each piece of area setting information. Moreover, each piece of area setting information can include an area to which no setting is assigned. The area setting information can be said also as information in which each the plurality of areas set in advance are labeled as a waste grabbing area, a waste releasing area, or another area which is not the waste grabbing area and the waste releasing area. The first-generation gene generating section 62 can generate a first-generation gene by converting the area setting information into a binary representation.

Note that a sequence of pieces of area setting information represents a transition of waste grabbing areas and waste releasing areas in the schedule period. The number of pieces of area setting information to be put together depends on a length of schedule period. For example, in a case where a time to operate the crane 14 is determined in advance based on a piece of area setting information, it is possible to specify the number of pieces of area setting information corresponding to a length of the schedule period. For a specific example, in a case where the crane 14 is operated for one hour based on a piece of area setting information and a schedule for 8 hours is prepared, a gene can be generated which is constituted by 8 pieces of area setting information. Alternatively, for example, in a case where the number of operations of the crane 14 is determined in advance based on a piece of area setting information, it is possible to specify the number of pieces of area setting information corresponding to a length of the schedule period. For example, the following case assumes that the crane 14 restacks or mixes waste 10 times for each area setting information. Here, in a case where a schedule for 8 hours in a time zone in which waste is to be brought in and restacking or mixing can be carried out 10 times per hour is prepared, a gene can be generated which is constituted by 8 pieces of area setting information.

It is possible to generate area setting information that indicates which area is set as a waste grabbing area among a plurality of areas set in advance, and further generate data including a sequence of pieces of such area setting information. In this case, among the plurality of areas set in advance, an area that has not been set as the waste grabbing area can be regarded as a waste releasing area. Similarly, it is possible to generate area setting information that indicates which area is set as a waste releasing area among a plurality of areas set in advance, and further generate data including a sequence of pieces of such area setting information.

### [Evaluation function]

In Embodiment 2 also, an evaluation function is used with which fitness increases as a state of waste in the waste storing section 11 becomes closer to an ideal state after operation is carried out in accordance with an operation pattern indicated by a gene to be evaluated, as with the above described embodiment. Note, however, that the evaluation function of Embodiment 2 is used to evaluate a state of waste in an area including a plurality of sections, instead of a state of waste in one section.

For example, it is possible to employ, as the evaluation function f(x), a function with which fitness increases as a variance between a criterion value and a representative value of the number of mixing actions in each area becomes smaller. Note that the representative value only needs to be a value that indicates a degree of mixing in the entire area and can be, for example, an average number of mixing actions among sections included in the area. Moreover, the criterion value can be set as with the above described embodiment. Alternatively, for example, it is possible to set a function f(x) with which fitness of an area increases as the number (or a ratio) of sections decreases in which the number of mixing actions is zero.

For example, it is possible to employ, as the evaluation function f(x), a function with which fitness increases as a variance between a criterion value and a representative value of a height of waste in each area becomes smaller. Note that the representative value only needs to be a value that indicates a degree of height of waste in the entire area and can be, for example, an average height of waste among sections included in the area. Moreover, the criterion value can be set as with the above described embodiment.

Note that it is possible to employ one of the above described evaluation functions alone or it is possible to employ two or more of the above described evaluation functions in combination. In a case where two or more of the evaluation functions are used in combination, weighting can be set for each of the evaluation functions. For example, it is possible to employ a configuration in which a weight assigned to an evaluation function in regard to a variance of the number of mixing actions is the heaviest, and a weight assigned to an evaluation function in regard to a variance of a height is the second heaviest. Alternatively, with use of a fuzzy algorithm, it is possible to obtain an optimal solution while taking into consideration the variance of the number of mixing actions and the variance of the height.

### [Evaluation based on evaluation function]

The optimization calculation section 63 evaluates a gene with use of the evaluation function f(x) as above described. Specifically, the optimization calculation section 63 specifies a state of waste after at least one of mixing and restacking is carried out with respect to waste in an initial state (i.e., a state indicated by pit state information 72) by shifting a waste grabbing area and a waste releasing area in a pattern indicated by a gene to be evaluated. Note that a state of waste can be represented by the number of mixing actions and a height in each of the sections. Then, the state is evaluated with use of the evaluation function f(x). For example, an evaluation value can be calculated by calculating a representative value of the numbers of mixing actions and a representative value of heights of waste in respective sections included in each of the areas and substituting those representative values into the evaluation function f(x).

Note that, with regard to area setting information constituting a gene, sections at which waste is to be grabbed in the waste grabbing area and sections at which waste is to be released in the waste releasing area are determined based on an algorithm that is set in advance. From this, it is possible to simulate a state of waste which state is obtained after the crane 14 is operated in accordance with a combination of the waste grabbing area and the waste releasing area indicated by the area setting information. For example, as an algorithm for determining a waste grabbing location, it is possible to employ an algorithm as follows: that is, a section in which a height of waste is not lower than a predetermined level is most preferentially set as a waste grabbing location and, in a case where there is no section in which a height of waste is not lower than the predetermined level, a section in which the number of mixing actions is zero is preferentially set as a waste grabbing location. Alternatively, for example, as an algorithm for determining a waste releasing location, it is possible to employ an algorithm as follows: that is, a section in which a height of waste is not higher than a predetermined level is most preferentially set as a waste releasing location and, in a case where there is no section in which a height of waste is not higher than the predetermined level, a section in which the number of mixing actions is zero is preferentially set as a waste releasing location.

### [Preparation of schedule in consideration of bringing-in of waste]

In a case where a schedule is prepared in consideration of bringing-in of waste, it is possible to employ a configuration in which the schedule period is divided into a plurality of time zones, and different evaluation functions (defining different ideal states (predetermined states)) are used for the respective time zones. For example, it is possible that, in a time zone in which waste is to be brought in, a gene for lowering a height of waste in the acceptance area is highly valued and, in a time zone in which waste is not to be brought in, a gene that enhances homogeneity of the number of mixing actions is highly valued.

As another example of preparing a schedule in consideration of bringing-in of waste, a method can be employed in which a time at which the acceptance area is set to be a waste grabbing area or a waste releasing area is determined in advance. In this case, a genetic algorithm is used only to set the mixing area as a waste grabbing area or as a waste releasing area. For example, it is possible to determine that the acceptance area is set as neither a waste grabbing area nor a waste releasing area in a time zone (e.g., a time zone from 3 hours before a start time of bringing-in to the start time of bringing-in) immediately before starting bringing-in of waste. Moreover, it is possible to determine that the acceptance area is set to be a waste grabbing area in a time zone following the starting of bringing-in. In this case, a genetic algorithm can be used to set the mixing area as a waste grabbing area or as a waste releasing area.

As still another example of preparing a schedule in consideration of bringing-in of waste, a method can be employed in which a weight assigned to an evaluation value is changed for each time zone. For example, in a time zone in which waste is to be brought in, a weight assigned to an evaluation value on a gene defining that the acceptance area is set as a waste grabbing area can be increased. From this, an operation schedule is more likely to be prepared in which the acceptance area is set as a waste grabbing area in the time zone in which waste is to be brought in. For example, in a time zone in which waste is not to be brought in, a weight assigned to an evaluation value on a gene defining that the acceptance area is set as a waste releasing area can be increased. From this, an operation schedule is more likely to be prepared in which waste is mixed with use of the acceptance area in the time zone in which waste is not to be brought in.

### [Modification example]

In the above described embodiments, the mixing operation is defined as operation in which all waste grabbed by the bucket 17 is released at a location to which the bucket 17 has been transferred. Note, however, that the mixing operation is not limited to the above described example, provided that waste can be homogeneously dispersed in the waste storing section 11. For example, it is possible to employ mixing operation in which the bucket 17 of the crane 14 is transferred while the bucket 17 is gradually opened, so that waste is to be scattered on a transfer pathway of the bucket 17.

Moreover, in the above described embodiments, the example has been described in which one crane control device 50 carries out both preparation of an operation schedule and control of the crane 14. Note, however, that preparation of an operation schedule and control of the crane 14 can be carried out with separate devices. Alternatively, it is possible to achieve functions similar to those of the crane control device 50 by a client server system in which a part of a process section included in the control section 51 is provided in a server that can communicate with the crane control device 50. In particular, in a case where the optimization calculation section 63 whose arithmetic processing load is high is provided in the server, it is advantageously possible to significantly reduce an arithmetic processing load of the crane control device 50.

In the above described embodiments, the example has been described in which an evaluation function based on the number of mixing actions is employed. Note, however, that an indicator of a degree of mixing is not limited to the number of mixing actions. For example, it is possible to evaluate a degree of mixing based on granularity, a bulk specific gravity, or the like of waste.

In the above embodiments, the example has been described in which an optimization operation is carried out with use of a genetic algorithm. Note, however, that it is possible to carry out an optimization operation with use of another evolutionary algorithm. For example, it is possible to carry out an optimization operation with use of genetic programming, evolutionary computation, or the like.

The crane control device 50 in the above embodiments can prepare an operation schedule in which an area or a section for placing waste to be put into the hopper 12 is set. In this case, an evaluation function can be used with which a gene as follows is highly valued: that is, the gene in which the number of mixing actions on waste in the area or the section is not less than a predetermined number of times that is sufficient for putting the waste into the hopper 12 during an entire period for which an operation schedule is prepared. In a case where the crane control section 66 carries out motion control of the crane 14 based on the operation schedule thus prepared, the crane control section 66 can control the crane 14 to grab waste in the area or the section when waste is to be put into the hopper 12. From this, it is possible to put waste which has been mixed by a sufficient number of times into the hopper 12. Moreover, it is possible to limit, to a specific section, a section in which the number of mixing actions varies due to putting of waste into the hopper 12.

### [Example of Configuration Achieved by Software]

The control blocks (in particular, the control section 51) of the crane control device 50 can be realized by a logic circuit (hardware) provided in an integrated circuit (1C chip) or the like or can be alternatively realized by software with use of a central processing unit (CPU).

In the latter case, the crane control device 50 includes a CPU that executes instructions of a program that is software realizing the foregoing functions: a read only memory (ROM) or a storage device (each referred to as "recording medium") in which the program and various kinds of data are stored so as to be readable by a computer (or a CPU); a random access memory (RAM) in which the program is loaded; and the like. In a case where the computer (or CPU) reads out the program from the recording medium and executes the program, the object of the present invention is achieved. The recording medium can be a "non-transitory tangible medium" such as, for example, a tape, a disk, a card, a semiconductor memory, a programmable logic circuit, or the like. The program can be supplied to the computer via any transmission medium (such as a communication network or a broadcast wave) that can transmit the program. The present invention can also be achieved in the form of a computer data signal in which the various programs are embodied via electronic transmission and which is embedded in a carrier wave.

The present invention is not limited to the embodiments, but can be altered by a skilled person in the art within the scope of the claims. The present invention also encompasses, in its technical scope as defined in the claims, any embodiment derived by combining technical means disclosed in differing embodiments.

### [Recap]

In order to attain the foregoing object, a calculation device in accordance with an aspect of the present invention is configured to prepare an operation schedule of a crane for a predetermined period, the crane transferring waste in a waste pit, the calculation device including: a first-generation gene generating section that generates a gene group including genes each of which indicates an operation pattern of the crane in the predetermined period, the operation pattern defining movement, opening, and closing of the crane; and an optimization calculation section that selects, based on an evolutionary algorithm, a gene indicating an operation pattern with which an initial state of degree of mixing of the waste is caused to become or become closer to a predetermined homogeneous state, the evolutionary algorithm being an algorithm in which evaluation of fitness of each of the genes included in the gene group and update of the gene group based on the evaluation are repeatedly carried out.

According to the configuration, a gene group is generated which includes genes each of which indicates an operation pattern defining movement, opening, and closing of the crane and, based on the evolutionary algorithm, a gene is selected which indicates an operation pattern with which an initial state of the waste is caused to become or become closer to a predetermined state.

Therefore, according to the configuration, it is possible to bring about an effect of automatically preparing an operation schedule of a crane for causing a state of degree of mixing of waste in the waste pit to become or become closer to a predetermined homogeneous state without relying on an experience and an intuition of an operator of the crane.

It is possible that a gene generated by the first-generation gene generating section includes (i) location information indicative of a location at which waste is grabbed during the predetermined period and (ii) location information indicative of a location at which the waste is released during the predetermined period; and a sequence of pieces of the location information in the gene represents a transition of locations of the crane.

According to the configuration, a gene is generated which includes (i) location information indicative of a location at which waste is grabbed during the predetermined period and (ii) location information indicative of a location at which the waste is released during the predetermined period, and a sequence of pieces of the location information in the gene represents a transition of locations of the crane. Further, based on the gene, a gene whose fitness has been improved is selected in accordance with the evolutionary algorithm. It is therefore possible to automatically prepare an operation schedule which (i) indicates a location at which waste is grabbed, a location at which the waste is released, and a transition of those locations, and (ii) makes it possible to cause a state of waste in the waste pit to become or become closer to a predetermined state.

It is possible that the calculation device further includes an input section that accepts a specification of the predetermined period, the first-generation gene generating section generating a gene that includes the location information whose number of pieces corresponds to the predetermined period.

According to the configuration, a specification of the predetermined period is accepted, and a gene is generated which includes the location information whose number of pieces corresponds to the predetermined period. Further, based on the gene, a gene whose fitness has been improved is selected in accordance with the evolutionary algorithm. It is therefore possible to prepare a crane operation schedule which makes it possible to cause a state of degree of mixing of waste in the waste pit to become or become closer to a predetermined homogeneous state by actions of grabbing and releasing waste by the number of times that corresponds to the specified predetermined period.

It is possible that the calculation device further includes an input section that accepts a specification of an unused area which is not used in mixing waste in the waste pit, the optimization calculation section selecting a gene that does not include location information indicating a location in the unused area.

According to the configuration, a specification of an unused area which is not used in mixing waste is accepted, and a gene that does not include location information indicating a location in the unused area is selected. It is therefore possible to prepare a crane operation schedule which makes it possible to cause a state of degree of mixing of waste in the waste pit to become or become closer to a predetermined homogeneous state without carrying out actions of grabbing or releasing waste in the unused area.

It is possible that, in a case where at least part of the unused area is an acceptance area for accepting waste which is brought into the waste pit, the optimization calculation section selects a gene that includes location information indicating a location in the acceptance area when an operation schedule for a period during which waste is not brought into the waste pit is prepared.

According to the configuration, in a case where at least part of the unused area is an acceptance area, a gene is selected which includes location information indicating a location in the acceptance area when an operation schedule for a period during which waste is not brought in is prepared. It is therefore possible to prepare a crane operation schedule which makes it possible to cause a state of degree of mixing of waste in the waste pit to become or become closer to a predetermined homogeneous state by utilizing the acceptance area for mixing during the period in which no waste is to be brought in.

The evaluation function used in the evaluation of fitness can be a function with which evaluated fitness increases as a variance of a degree of mixing waste among a plurality of sections defined in the waste pit becomes smaller.

According to the configuration, the evaluation function is used with which evaluated fitness increases as a variance of a degree of mixing waste in the waste pit becomes smaller, and it is therefore possible to prepare a crane operation schedule which makes it possible to cause a degree of mixing waste in the waste pit to become or become closer to a homogeneous state.

The evaluation function can be a function with which evaluated fitness increases as a variance of a height of waste in the waste pit becomes smaller.

According to the configuration, the evaluation function is used with which evaluated fitness increases as a variance of a height of waste in the waste pit becomes smaller. It is therefore possible to prepare a crane operation schedule which makes it possible to cause a height of waste and a degree of mixing waste in the waste pit to become homogeneous or become closer to homogeneous.

The evaluation function can be a function with which evaluated fitness increases as a total moving distance of the crane during the predetermined period becomes shorter.

According to the configuration, the evaluation function is used with which evaluated fitness increases as a total moving distance of the crane becomes shorter, and it is therefore possible to prepare a crane operation schedule which makes it possible to cause a degree of mixing waste in the waste pit to become homogeneous or become closer to homogeneous with a shorter moving distance. In a case where the moving distance is thus shortened, it is possible to reduce electric power consumed in operation of the crane.

It is possible that the evaluation function is a function with which evaluated fitness increases in a case where the crane is operated in an operation pattern indicated by the gene and a height of waste in an acceptance area for waste is not higher than a predetermined level a predetermined time period prior to a time at which waste is brought into the waste pit.

According to the configuration, it is possible to automatically prepare a crane operation schedule which makes it possible to cause a height of waste in the acceptance area to become or become closer to a state of being not higher than a predetermined level a predetermined time period prior to a time at which waste is brought into the waste pit. From this, by operating the crane in accordance with the operation schedule, it is possible to smoothly start accepting waste at the time to bring in waste.

It is possible that the plurality of sections are obtained by three-dimensionally dividing waste in the waste pit in a horizontal direction and a vertical direction.

According to the configuration, it is possible to prepare a crane operation schedule which makes it possible to cause a degree of mixing waste in the waste pit to become homogeneous or become closer to homogeneous not only in the horizontal direction but also in the vertical direction.

It is possible that the calculation device further includes: a pit state predicting section that generates pit state prediction information which indicates a state of waste in the waste pit at a time point during the predetermined period, the state of waste indicated by the pit state prediction information reflecting at least any of bringing of waste into the waste pit and taking waste out of the waste pit which are carried out by the time point, the optimization calculation section selecting a gene that indicates an operation pattern with which a state of waste indicated by the pit state prediction information is caused to become or become closer to the predetermined state in a period subsequent to the time point.

According to the configuration, the pit state prediction information is generated which reflects at least any of bringing-in of waste and taking-out of waste and indicates a state of degree of mixing of waste at a time point during the predetermined period. Further, a gene is selected which indicates an operation pattern with which a state of degree of mixing of waste indicated by the pit state prediction information is caused to become or become closer to the predetermined homogeneous state in a period subsequent to the time point. From this, it is possible to prepare an operation schedule which reflects influence of at least any of bringing-in of waste and taking-out of waste.

It is possible that the optimization calculation section selects a gene with use of different evaluation functions defining different predetermined states for respective time zones in the predetermined period.

According to the configuration, a gene is selected with use of different evaluation functions defining different predetermined states for respective time zones in the predetermined period. From this, the state of waste in the waste pit can be varied for each time zone. For example, it is possible that, after entire waste of a certain area is restacked in another area, the waste in the another area is returned to the certain area.

It is possible that the calculation device further includes: a pit model generating section that generates a pit model image, the pit model image three-dimensionally indicating a state of waste in the waste pit which state is obtained after the crane is operated in accordance with an operation pattern indicated by a gene that has been generated by the optimization calculation section.

According to the configuration, a pit model image is generated which three-dimensionally indicates a state of waste in the waste pit which state is obtained after the crane is operated in accordance with an operation pattern indicated by the generated gene. This allows the user to easily confirm validity of the operation pattern indicated by the generated gene.

It is possible that the calculation device further includes: a crane control section that controls the crane to operate in accordance with an operation pattern indicated by a gene that has been generated by the optimization calculation section.

According to the configuration, the crane is operated in accordance with an operation pattern indicated by the generated gene. Therefore, it is possible to cause a state of degree of mixing of waste in the waste pit to become or become closer to the predetermined homogeneous state by automatic operation that does not require manipulation by the user.

It is possible that a gene that is generated by the first-generation gene generating section is constituted by area setting information that indicates a waste grabbing area and a waste releasing area, the waste grabbing area being constituted by sections which are locations at which the crane grabs waste among a plurality of sections defined in the waste pit, and the waste releasing area being constituted by sections which are not the sections included in the waste grabbing area among the plurality of sections and are locations at which the waste grabbed in the waste grabbing area is released; and a sequence of pieces of the area setting information in the gene represents a transition of the waste grabbing area in the predetermined period and a transition of the waste releasing area in the predetermined period.

According to the configuration, it is possible to automatically prepare a crane operation schedule which makes it possible to cause a state of degree of mixing of waste in the waste pit to become or become closer to the predetermined homogeneous state by optimally shifting the waste releasing area and the waste grabbing area. Moreover, in order to attain the foregoing object, a method in accordance with an aspect of the present invention is a method for controlling a calculation device that prepares an operation schedule of a crane for a predetermined period, the crane transferring waste in a waste pit, and includes the steps of: generating a gene group including genes each of which indicates an operation pattern of the crane in the predetermined period, the operation pattern defining movement, opening, and closing of the crane; and selecting, based on an evolutionary algorithm, a gene indicating an operation pattern with which an initial state of degree of mixing of the waste is caused to become or become closer to a predetermined homogeneous state, the evolutionary algorithm being an algorithm in which evaluation of fitness of each of the genes included in the gene group and update of the gene group based on the evaluation are repeatedly carried out. Therefore, it is possible to bring about an effect similar to that of the calculation device.

The calculation device in accordance with each of the aspects of the present invention can be realized by a computer. In such a case, the present invention encompasses (i) a control program of the calculation device which control program causes the computer to serve as the sections (software elements) included in the calculation device for realizing the calculation device and (ii) a computer-readable recording medium storing the control program.

### Reference Signs List

- 1:: Waste pit
- 14:: Crane
- 50:: Crane control device (calculation device)
- 53:: Input section
- 62:: First-generation gene generating section
- 63:: Optimization calculation section
- 64:: Pit state predicting section

## Claims

1. A calculation device configured to prepare an operation schedule of a crane (14) for a predetermined period, the crane (14) transferring waste in a waste pit (1), said calculation device comprising:
a first-generation gene generating section (62) configured to generate a gene group including genes each of which indicates an operation pattern of the crane (14) in the predetermined period, the operation pattern defining movement, opening, and closing of the crane (14); and
an optimization calculation section (63) configured to select, based on an evolutionary algorithm, a gene indicating an operation pattern with which an initial state of degree of mixing of the waste is caused to become or become closer to a predetermined homogeneous state, the evolutionary algorithm being an algorithm in which evaluation of fitness of each of the genes included in the gene group and update of the gene group based on the evaluation are repeatedly carried out.

2. The calculation device as set forth in claim 1, wherein:
a gene generated by the first-generation gene generating section (62) includes (i) location information indicative of a location at which waste is grabbed during the predetermined period and (ii) location information indicative of a location at which the waste is released during the predetermined period; and
a sequence of pieces of the location information in the gene represents a transition of locations of the crane (14).

3. The calculation device as set forth in claim 2, further comprising:
an input section (53) configured to accept a specification of the predetermined period,
the first-generation gene generating section (62) is configured to generate a gene that includes the location information whose number of pieces corresponds to the predetermined period.

4. The calculation device as set forth in claim 2 or 3, further comprising:
an or the input section (53) configured to accept a specification of an unused area which is not used in mixing waste in the waste pit (1),
the optimization calculation section (63) is configured to select a gene that does not include location information indicating a location in the unused area.

5. The calculation device as set forth in claim 4, wherein:
in a case where at least part of the unused area is an acceptance area for accepting waste which is brought into the waste pit (1), the optimization calculation section (63) is configured to select a gene that includes location information indicating a location in the acceptance area when an operation schedule for a period during which waste is not brought into the waste pit is prepared.

6. The calculation device as set forth in any one of claims 1 through 5, wherein:
an evaluation function used in the evaluation of fitness is a function with which (i) evaluated fitness increases as a variance of a degree of mixing waste among a plurality of sections defined in the waste pit (1) becomes smaller, (ii) evaluated fitness increases as a variance of a height of waste in the waste pit becomes smaller, and (iii) evaluated fitness increases as a total moving distance of the crane during the predetermined period becomes shorter.

7. The calculation device as set forth in claim 6, wherein the evaluation function is a function with which evaluated fitness increases in a case where the crane is operated in an operation pattern indicated by the gene and a height of waste in an acceptance area for waste is not higher than a predetermined level a predetermined time period prior to a time at which waste is brought into the waste pit (1).

8. The calculation device as set forth in claim 6 or 7, wherein the plurality of sections defined in the waste pit (1) are obtained by three-dimensionally dividing waste in the waste pit (1) in a horizontal direction and a vertical direction.

9. The calculation device as set forth in any one of claims 1 through 8, further comprising:
a pit state predicting section (64) configured to generate pit state prediction information (72) which indicates a state of waste in the waste pit (1) at a time point during the predetermined period, the state of waste indicated by the pit state prediction information reflecting at least any of bringing of waste into the waste pit (1) and taking waste out of the waste pit (1) which are carried out by the time point,
the optimization calculation section (63) is configured to select a gene that indicates an operation pattern with which a state of waste indicated by the pit state prediction information is caused to become or become closer to the predetermined state in a period subsequent to the time point.

10. The calculation device as set forth in any one of claims 1 through 9, wherein the optimization calculation section (63) is configured to select a gene with use of different evaluation functions defining different predetermined states for respective time zones in the predetermined period.

11. The calculation device as set forth in any one of claims 1 through 10, further comprising:
a pit model generating section (65) configured to generate a pit model image, the pit model image three-dimensionally indicating a state of waste in the waste pit which state is obtained after the crane (14) is operated in accordance with an operation pattern indicated by a gene that has been generated by the optimization calculation section (63).

12. The calculation device as set forth in any one of claims 1 through 11, further comprising:
a crane control section (66) configured to control the crane to operate in accordance with an operation pattern indicated by a gene that has been generated by the optimization calculation section (63).

13. The calculation device as set forth in claim 1, wherein:
a gene that is generated by the first-generation gene generating section (62) is constituted by area setting information that indicates a waste grabbing area and a waste releasing area, the waste grabbing area being constituted by sections which are locations at which the crane (14) grabs waste among a plurality of sections defined in the waste pit (1), and the waste releasing area being constituted by sections which are not the sections included in the waste grabbing area among the plurality of sections defined in the waste pit (1) and are locations at which the waste grabbed in the waste grabbing area is released; and
a sequence of pieces of the area setting information in the gene represents a transition of the waste grabbing area in the predetermined period and a transition of the waste releasing area in the predetermined period.

14. A method for controlling a calculation device that prepares an operation schedule of a crane (14) for a predetermined period, the crane (14) transferring waste in a waste pit (1), said method comprising the steps of:
generating a gene group including genes each of which indicates an operation pattern of the crane (14) in the predetermined period, the operation pattern defining movement, opening, and closing of the crane (14); and
selecting, based on an evolutionary algorithm, a gene indicating an operation pattern with which an initial state of degree of mixing of the waste is caused to become or become closer to a predetermined homogeneous state, the evolutionary algorithm being an algorithm in which evaluation of fitness of each of the genes included in the gene group and update of the gene group based on the evaluation are repeatedly carried out.

15. A control program for causing a computer to serve as a calculation device recited in claim 1, said control program causing the computer to serve as the first-generation gene generating section (62) and the optimization calculation section (63).

16. A computer-readable recording medium that stores a control program recited in claim 15.

## Patentansprüche

1. Rechenvorrichtung, die ausgebildet ist, einen Betriebszeitplan eines Krans (14) für eine vorbestimmte Zeitdauer zu erstellen, wobei der Kran (14) Abfall in einer Müllhalde (1) umschichtet, wobei die Rechenvorrichtung aufweist:
einen Erstgenerationsgenerzeugungsblock (62), der ausgebildet ist, eine Gengruppe mit Genen zu erzeugen, wovon jedes ein Betriebsmuster des Krans (14) in der vorbestimmten Zeitdauer kennzeichnet, wobei das Betriebsmuster eine Bewegung, ein Öffnen und ein Schließen des Krans (14) festlegt; und
einen Optimierungsrechenblock (63), der ausgebildet ist, auf der Grundlage eines evolutionären Algorithmus ein Gen auszuwählen, das ein Betriebsmuster kennzeichnet, mit welchem bewirkt wird, dass ein Anfangszustand des Grades an Mischung des Abfalls zu einem vorbestimmten homogenen Zustand wird oder eine Annäherung an diesen bewirkt wird, wobei der evolutionäre Algorithmus ein Algorithmus ist, in welchem eine Bewertung der Eignung jedes in der Gengruppe enthaltenen Gens und eine Aktualisierung der Gengruppe auf der Grundlage der Bewertung wiederholt ausgeführt werden.

2. Rechenvorrichtung nach Anspruch 1, wobei:
ein durch den Erstgenerationsgenerzeugungsblock (62) erzeugtes Gen enthält: (i) Positionsinformation, die eine Position angibt, an der Abfall während der vorbestimmten Zeitdauer aufgenommen wird, und (ii) Positionsinformation, die eine Position angibt, an der der Abfall während der vorbestimmten Zeitdauer freigesetzt wird; und
eine Sequenz aus Elementen der Positionsinformation in dem Gen einen Übergang von Positionen des Krans (14) repräsentiert.

3. Rechenvorrichtung nach Anspruch 2, die ferner aufweist:
einen Eingabeblock (53), der ausgebildet ist, eine Angabe für die vorbestimmte Zeitdauer aufzunehmen,
wobei der Erstgenerationsgenerzeugungsblock (62) ausgebildet ist, ein Gen zu erzeugen, das die Positionsinformation beinhaltet, deren Anzahl an Elementen der vorbestimmten Zeitdauer entspricht.

4. Rechenvorrichtung nach Anspruch 2 oder 3, die ferner aufweist:
einen oder den Eingabeblock (53), der ausgebildet ist, eine Angabe über ein unbenutztes Gebiet zu erhalten, das bei der Mischung von Abfall in der Müllhalde (1) nicht verwendet wird,
wobei der Optimierungsrechenblock (63) ausgebildet ist, ein Gen auszuwählen, das Positionsinformation, die eine Position in dem unbenutzten Gebiet kennzeichnet, nicht enthält.

5. Rechenvorrichtung nach Anspruch 4, wobei:
wenn zumindest ein Teil des unbenutzten Gebiets ein Aufnahmegebiet zur Aufnahme von Abfall ist, der in die Müllhalde (1) gebracht wird, der Optimierungsrechenblock (63) ausgebildet ist, ein Gen auszuwählen, das Positionsinformation enthält, die eine Position in dem Aufnahmegebiet kennzeichnet, wenn ein Betriebszeitplan für eine Zeitdauer, während welcher Abfall nicht in die Müllhalde gebracht wird, erstellt wird.

6. Rechenvorrichtung nach einem der Ansprüche 1 bis 5, wobei:
eine Bewertungsfunktion, die bei der Bewertung der Eignung verwendet wird, eine Funktion ist, mit der (i) eine bewertete Eignung größer wird, wenn eine Varianz des Grades an Mischung von Abfall aus mehreren Abschnitten, die in der Müllhalde (1) abgegrenzt sind, kleiner wird, (ii) eine bewertete Eignung größer wird, wenn eine Varianz einer Höhe des Abfalls in der Mullhalde kleiner wird, und (iii) eine bewertete Eignung größer wird, wenn eine gesamte Bewegungsstrecke des Krans während der vorbestimmten Zeitdauer kleiner wird.

7. Rechenvorrichtung nach Anspruch 6, wobei die Bewertungsfunktion eine Funktion ist, bei der eine bewertete Eignung größer wird, wenn der Kran mit einem Betriebsmuster betrieben wird, das durch das Gen gekennzeichnet ist, und eine Höhe des Abfalls in einem Aufnahmegebiet für Abfall nicht höher als eine vorbestimmte Höhe in einer vorbestimmten Zeitdauer vor einer Zeit ist, zu der der Abfall in die Müllhalde (1) gebracht wird.

8. Rechenvorrichtung nach Anspruch 6 oder 7, wobei die mehreren Abschnitte, die in der Müllhalde (1) abgegrenzt sind, durch dreidimensionales Unterteilen von Abfall in einer horizontalen Richtung und einer vertikalen Richtung in der Müllhalde (1) erhalten werden.

9. Rechenvorrichtung nach einem der Ansprüche 1 bis 8, die ferner aufweist:
einen Haldenzustandsvorhersageblock (64), der ausgebildet ist, eine Haldenzustandsvorhersageinformation (72) zu erzeugen, die einen Zustand des Abfalls in der Müllhalde (1) zu einem Zeitpunkt während der vorherbestimmten Zeitdauer angibt, wobei der Zustand des Abfalls, der durch die Haldenzustandsvorhersageinformation angegeben wird, das Einbringen von Abfall in die Müllhalde (1) und/oder das Herausnehmen von Abfall aus der Müllhalde (1), die zu dem Zeitpunkt ausgeführt werden, wiedergibt,
wobei der Optimierungsrechenblock (63) ausgebildet ist, ein Gen auszuwählen, das ein Betriebsmuster kennzeichnet, mit welchem ein Zustand des Abfalls, der durch die Haldenzustandsvorhersageinformation angegeben wird, in einer Zeitdauer nach dem Zeitpunkt zu dem vorbestimmten Zustand wird oder sich diesem annähert.

10. Rechenvorrichtung nach einem der Ansprüche 1 bis 9, wobei der Optimierungsrechenblock (63) ausgebildet ist, ein Gen mit Verwendung unterschiedlicher Bewertungsfunktionen auszuwählen, die unterschiedliche vorbestimmte Zustände für entsprechende Zeitzonen in der vorbestimmten Zeitdauer festlegen.

11. Rechenvorrichtung nach einem der Ansprüche 1 bis 10, die ferner aufweist:
einen Haldenmodellerzeugungsblock (65), der ausgebildet ist, ein Haldenmodellabbild zu erzeugen, wobei das Haldenmodellabbild in dreidimensionaler Weise einen Zustand des Abfalls in der Müllhalde angibt, wobei der Zustand erhalten wird, nachdem der Kran (14) entsprechend einem Betriebsmuster betrieben wird, das durch ein Gen gekennzeichnet ist, das durch den Optimierungsrechenblock (63) erzeugt worden ist.

12. Rechenvorrichtung nach einem der Ansprüche 1 bis 11, die ferner aufweist:
einen Kransteuerungsblock (66), der ausgebildet ist, den Kran so zu steuern, dass er gemäß einem Betriebsmuster arbeitet, das durch ein Gen gekennzeichnet ist, das durch den Optimierungsrechenblock (63) erzeugt worden ist.

13. Rechenvorrichtung nach Anspruch 1, wobei:
ein Gen, das durch den Erstgenerationsgenerzeugungsblock (62) erzeugt ist, durch eine Gebietsfestlegungsinformation gebildet wird, die ein Abfallaufnahmegebiet und ein Abfallfreigabegebiet angibt, wobei das Abfallaufnahmegebiet durch Abschnitte, die Orte sind, an denen der Kran (14) Abfall aufnimmt, von mehreren Abschnitten gebildet ist, die in der Müllhalde (1) abgegrenzt sind, und wobei das Abfallfreigabegebiet durch Abschnitte, die nicht die Abschnitte sind, die in dem Abfallaufnahmegebiet enthalten sind, aus den mehreren Abschnitten gebildet ist, die in der Müllhalde (1) abgegrenzt sind und die Orte sind, an denen der Abfall, der in dem Abfallaufnahmegebiet aufgegriffen wird, freigesetzt wird; und
eine Sequenz aus Elementen der Gebietsfestlegungsinformation in dem Gen einen Wechsel des Abfallaufnahmegebiets in der vorbestimmten Zeitdauer und einen Wechsel des Abfallfreigabegebiets in der vorbestimmten Zeitdauer repräsentiert.

14. Verfahren zur Steuerung einer Rechenvorrichtung, die einen Betriebszeitplan eines Krans (14) für eine vorbestimmte Zeitdauer erstellt, wobei der Kran (14) Abfall in einer Müllhalde (1) umschichtet, wobei das Verfahren die Schritte umfasst:
Erzeugen einer Gengruppe, die Gene angibt, wovon jedes ein Betriebsmuster des Krans (14) in der vorbestimmten Zeitdauer kennzeichnet, wobei das Betriebsmuster eine Bewegung, ein Öffnen und ein Schließen des Krans (14) festlegt; und
Auswählen, auf der Grundlage eines evolutionären Algorithmus, eines Gens, das ein Betriebsmuster kennzeichnet, mit welchem ein Anfangszustand des Grades an Mischung des Abfalls zu einem vorbestimmten homogenen Zustand wird oder sich diesem annähert, wobei der evolutionäre Algorithmus ein Algorithmus ist, in welchem eine Bewertung der Eignung jedes der Gene, das in der Gengruppe enthalten ist, und eine Aktualisierung der Gengruppe auf der Grundlage der Bewertung wiederholt ausgeführt werden.

15. Steuerungsprogramm, um zu bewirken, dass ein Computer als eine Rechenvorrichtung agiert, die in Anspruch 1 genannt ist, wobei das Steuerungsprogramm den Computer veranlasst, als der Erstgenerationsgenerzeugungsblock (62) und der Optimierungsrechenblock (63) zu agieren.

16. Computerlesbares Aufzeichnungsmedium, das ein Steuerungsprogramm nach Anspruch 15 speichert.

## Revendications

1. Dispositif de calcul configuré pour préparer un programme de fonctionnement d'une grue (14) pendant une durée prédéterminée, la grue (14) transférant les déchets dans une fosse à déchets (1), ledit dispositif de calcul comprenant :
une section de génération de gène de première génération (62) configurée pour générer un groupe de gènes comportant des gènes dont chacun indique un schéma de fonctionnement de la grue (14) dans la période prédéterminée, le schéma de fonctionnement définissant le mouvement, l'ouverture et la fermeture de la grue (14) ; et
une section de calcul d'optimisation (63) configurée pour sélectionner, sur la base d'un algorithme évolutif, un gène indiquant un schéma de fonctionnement avec lequel un état initial de degré de mélange des déchets est amené à devenir un état homogène prédéterminé ou à se rapprocher de celui-ci, l'algorithme évolutif étant un algorithme dans lequel l'évaluation de la compatibilité de chacun des gènes inclus dans le groupe de gènes et la mise à jour du groupe de gènes sur la base de l'évaluation sont effectuées de manière répétée.

2. Dispositif de calcul selon la revendication 1, dans lequel :
un gène généré par la section de génération de gène de première génération (62) comporte (i) des informations d'emplacement indiquant un emplacement auquel les déchets sont saisis pendant la période prédéterminée et (ii) des informations d'emplacement indiquant un emplacement auquel les déchets sont libérés pendant la période prédéterminée ; et
une séquence d'éléments des informations d'emplacement dans le gène représente une transition d'emplacements de la grue (14).

3. Dispositif de calcul selon la revendication 2, comprenant en outre :
une section d'entrée (53) configurée pour accepter une spécification de la période prédéterminée,
la section de génération de gène de première génération (62) est configurée pour générer un gène qui comporte les informations d'emplacement dont le nombre d'éléments correspond à la période prédéterminée.

4. Dispositif de calcul selon la revendication 2 ou 3, comprenant en outre :
une ou la section d'entrée (53) configurée pour accepter une spécification d'une zone inutilisée qui n'est pas utilisée pour mélanger les déchets dans la fosse à déchets (1),
la section de calcul d'optimisation (63) est configurée pour sélectionner un gène qui ne comporte pas des informations d'emplacement indiquant un emplacement dans la zone inutilisée.

5. Dispositif de calcul selon la revendication 4, dans lequel :
dans le cas où au moins une partie de la zone inutilisée est une zone d'acceptation pour accepter des déchets qui sont amenés dans la fosse à déchets (1), la section de calcul d'optimisation (63) est configurée pour sélectionner un gène qui comporte des informations d'emplacement indiquant un emplacement dans la zone d'acceptation lorsqu'un programme de fonctionnement pour une période pendant laquelle les déchets ne sont pas amenés dans la fosse à déchets est préparé.

6. Dispositif de calcul selon l'une quelconque des revendications 1 à 5, dans lequel :
une fonction d'évaluation utilisée dans l'évaluation de la compatibilité est une fonction avec laquelle (i) la compatibilité évaluée augmente à mesure qu'une variance d'un degré de mélange des déchets entre une pluralité de sections définies dans la fosse à déchets (1) devient plus petite, (ii) la compatibilité évaluée augmente à mesure qu'une variance d'une hauteur des déchets dans la fosse à déchets devient plus petite, et (iii) la compatibilité évaluée augmente à mesure qu'une distance de déplacement totale de la grue pendant la période prédéterminée devient plus courte.

7. Dispositif de calcul selon la revendication 6, dans lequel la fonction d'évaluation est une fonction avec laquelle la compatibilité évaluée augmente dans le cas où la grue fonctionne selon un schéma de fonctionnement indiqué par le gène et une hauteur de déchets dans une zone d'acceptation pour les déchets ne dépasse pas un niveau prédéterminé pendant une durée prédéterminée avant le moment auquel les déchets sont amenés dans la fosse à déchets (1).

8. Dispositif de calcul selon la revendication 6 ou 7, dans lequel la pluralité de sections définies dans la fosse à déchets (1) sont obtenues en divisant en trois dimensions les déchets dans la fosse à déchets (1) dans une direction horizontale et une direction verticale.

9. Dispositif de calcul selon l'une quelconque des revendications 1 à 8, comprenant en outre :
une section de prédiction d'état de fosse (64) configurée pour générer des informations de prédiction d'état de fosse (72) qui indiquent un état des déchets dans la fosse à déchets (1) à un moment donné pendant la période prédéterminée, l'état des déchets indiqué par les informations de prédiction d'état de fosse reflétant au moins l'un(e) quelconque parmi l'amenée des déchets dans la fosse à déchets (1) et le retrait des déchets de la fosse à déchets (1) qui sont effectués à un moment donné,
la section de calcul d'optimisation (63) est configurée pour sélectionner un gène qui indique un schéma de fonctionnement avec lequel un état des déchets indiqué par les informations de prédiction d'état de fosse est amené à devenir l'état prédéterminé ou à se rapprocher de celui-ci dans une période postérieure au moment donné.

10. Dispositif de calcul selon l'une quelconque des revendications 1 à 9, dans lequel la section de calcul d'optimisation (63) est configurée pour sélectionner un gène avec l'utilisation de différentes fonctions d'évaluation définissant différents états prédéterminés pour des fuseaux horaires respectifs dans la période prédéterminée.

11. Dispositif de calcul selon l'une quelconque des revendications 1 à 10, comprenant en outre :
une section de génération de modèle de fosse (65) configurée pour générer une image de modèle de fosse, l'image de modèle de fosse indiquant en trois dimensions un état des déchets dans la fosse à déchets, lequel état est obtenu après que la grue (14) fonctionne conformément à un schéma de fonctionnement indiqué par un gène qui a été généré par la section de calcul d'optimisation (63).

12. Dispositif de calcul selon l'une quelconque des revendications 1 à 11, comprenant en outre :
une section de commande de grue (66) configurée pour commander la grue afin qu'elle fonctionne conformément à un schéma de fonctionnement indiqué par un gène qui a été généré par la section de calcul d'optimisation (63).

13. Dispositif de calcul selon la revendication 1, dans lequel :
un gène qui est généré par la section de génération de gène de première génération (62) est constitué par des informations de réglage de zone qui indiquent une zone de saisie des déchets et une zone de libération des déchets, la zone de saisie des déchets étant constituée par des sections qui sont des emplacements auxquels la grue (14) saisit les déchets parmi une pluralité de sections définies dans la fosse à déchets (1), et la zone de libération des déchets étant constituée par des sections qui ne sont pas les sections incluses dans la zone de saisie des déchets parmi la pluralité de sections définies dans la fosse à déchets (1) et sont des emplacements auxquels les déchets saisis dans la zone de saisie des déchets sont libérés ; et
une séquence d'éléments des informations de réglage de zone dans le gène représente une transition de la zone de saisie des déchets dans la période prédéterminée et une transition de la zone de libération des déchets dans la période prédéterminée.

14. Procédé de commande d'un dispositif de calcul qui prépare un programme de fonctionnement d'une grue (14) pendant une période prédéterminée, la grue (14) transférant les déchets dans une fosse à déchets (1), ledit procédé comprenant les étapes consistant à :
générer un groupe de gènes comportant des gènes dont chacun indique un schéma de fonctionnement de la grue (14) dans la période prédéterminée, le schéma de fonctionnement définissant le mouvement, l'ouverture et la fermeture de la grue (14) ; et
sélectionner, sur la base d'un algorithme évolutif, un gène indiquant un schéma de fonctionnement avec lequel un état initial de degré de mélange des déchets est amené à devenir un état homogène prédéterminé ou à se rapprocher de celui-ci, l'algorithme évolutif étant un algorithme dans lequel l'évaluation de la compatibilité de chacun des gènes inclus dans le groupe de gènes et la mise à jour du groupe de gènes sur la base de l'évaluation sont effectuées de manière répétée.

15. Programme de commande pour amener un ordinateur à servir de dispositif de calcul selon la revendication 1, ledit programme de commande amenant l'ordinateur à servir de section de génération de gène de première génération (62) et de section de calcul d'optimisation (63).

16. Support d'enregistrement lisible par ordinateur qui stocke un programme de commande selon la revendication 15.
